(19) Europäisches Patentamt
European Patent Office
Office européen des brevets

(11) EP 4 296 708 A1

(12) EUROPEAN PATENT APPLICATION
published in accordance with Art. 153(4) EPC

(43) Date of publication:
27.12.2023 Bulletin 2023/52

(21) Application number: 22755913.5

(22) Date of filing: 31.01.2022

(51) International Patent Classification (IPC):
*G01S 7/03* (2006.01) *B32B 7/025* (2019.01)
*C08J 9/16* (2006.01) *C08J 9/228* (2006.01)
*C08J 9/36* (2006.01) *H01Q 1/42* (2006.01)
*H01Q 15/08* (2006.01)

(52) Cooperative Patent Classification (CPC):
B32B 7/025; C08J 9/16; C08J 9/228; C08J 9/36; G01S 7/03; H01Q 1/42; H01Q 15/08

(86) International application number:
PCT/JP2022/003692

(87) International publication number:
WO 2022/176591 (25.08.2022 Gazette 2022/34)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 19.02.2021 JP 2021025597
30.07.2021 JP 2021126256

(71) Applicant: Asahi Kasei Kabushiki Kaisha
Tokyo 1000006 (JP)

(72) Inventor: KASAI Tatsuaki
Tokyo 100-0006 (JP)

(74) Representative: D Young & Co LLP
120 Holborn
London EC1N 2DY (GB)

# (54) COVER

(57) A cover for an electronic device that transmits and receives radio waves in a high-frequency band, the cover comprising a resin and satisfying the relationship of the following formula:

$$(100 - \text{frontal transmittance X}) \times (100 - \text{oblique transmittance Y}) < 55$$

(where the frontal transmittance X (%) is a radio wave transmittance at an angle of incidence of 0 ° of the cover at a frequency f (Hz), and the oblique transmittance Y (%) is a radio wave transmittance of TE wave at an angle of incidence of 60 ° of the cover at the frequency f (Hz)).

EP 4 296 708 A1

## Description

TECHNICAL FIELD

The present disclosure relates to a cover for an electronic device that transmits and receives radio waves in high-frequency bands.

BACKGROUND

It is known that radio waves having higher frequencies are likely to be attenuated and have increased rectilinear propagation of light. Therefore, for electronic devices that transmit and receive high-frequency radio waves in the 1 to 100 GHz band, it is important to increase the intensities of radio waves and range of radio waves at angles of incidence in a wide range, in addition radio waves from the frontal direction at an angle of incidence of 0 °. Therefore, a high radio wave permeability is required for covers used for electronic devices that transmit and receive radio waves in the high-frequency band (see, for example, PTLs 1 and 2).

CITATION LIST

PTL 1: JP 2020-159985 A
PTL 2: JP 2020-180986 A

SUMMARY

(Technical Problem)

However, the above conventional covers have room for further improvement in terms of increasing transparency to radio waves at angles of incidence in a wide range.

An object of the present disclosure is therefore to provide a cover that has a high radio wave permeability for radio waves in the frontal direction (at an angle of incidence of 0 °) and also has a high radio wave permeability for radio waves at angles of incidence in a wide range.

(Solution to Problem)

As a result of diligent study to solve the above problem, the present inventor has found that the above problem can be solved by producing a cover having the value determined by (100 - frontal transmittance X) × (100 - oblique transmittance Y) in a specific range, thereby completing the present disclosure.

Note that the frontal transmittance X (%) refers to the radio wave transmittance of the cover at an angle of incidence of 0 ° at a frequency f (Hz), and the oblique transmittance Y (%) refers to the radio wave transmittance of TE wave of the cover at an angle of incidence of 60 ° at the frequency f (Hz).

Specifically, the present disclosure is as follows.

[1] A cover for an electronic device that transmits and receives radio waves in a high-frequency band, the cover comprising a resin and satisfying the relationship of the following formula:

$$(100 - \text{a frontal transmittance X}) \times (100 - \text{an oblique transmittance Y}) < 55$$

(where the frontal transmittance X (%) is a radio wave transmittance at an angle of incidence of 0 ° of the cover at a frequency f (Hz), and the oblique transmittance Y (%) is a radio wave transmittance of TE wave at an angle of incidence of 60 ° of the cover at the frequency f (Hz)).

[2] The cover according to [1],

being a monolayer or a laminate composed of N layers (N is an integer equal to or greater than 1),
wherein an absolute value of a difference (| $M_{12}$ - $M_{21}$ |) between a magnitude $M_{12}$ of an $m_{12}$ component and

a magnitude $M_{21}$ of an $m_{21}$ component in a frontal direction (at an angle of incidence of 0 °) in the following characteristic matrix formula is 0.35 or less,
each component of the characteristic matrix is calculated from the following formulas:

[Math 1]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where ω is an angular frequency [rad/s], c is the speed of light [m/s], n; is a complex refractive index of an $i^{th}$ layer, $d_i$ is a thickness of the $i^{th}$ layer [m], $\theta_i$ is a refractive angle of an electromagnetic wave incident on the $i^{th}$ layer [rad], j is the imaginary unit, $\varepsilon_{ri}$ is a complex relative permittivity of the $i^{th}$ layer, $\mu_{ri}$ is a complex relative magnetic permeability of the $i^{th}$ layer, $n_0$ is the refractive index of the air, and $\theta_0$ is an angle of incidence [rad]), and the complex refractive index $n_i$ of the $i^{th}$ layer is determined by the following formula, and, from the obtained complex refractive index n;, the magnitude $N_i$ thereof is obtained:

[Math 2]

$$n_i = n_i' + \mathrm{j}n_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where $n_i$ is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan δ is a dielectric dissipation factor, $\varepsilon_i$' is a relative permittivity, and ε;" is a relative dielectric loss factor).

[3] The cover according to [1] or [2], satisfying the relationship of the following formula:

| the frontal transmittance X - the oblique transmittance Y | < 25

(where the frontal transmittance X (%) is a radio wave transmittance at an angle of incidence of 0 ° of the cover at the frequency f (Hz), and the oblique transmittance Y (%) is a radio wave transmittance of TE wave at an angle of incidence of 60 ° of the cover at the frequency f (Hz)).

[4] The cover according to any one of [1] to [3],

being a monolayer or a laminate composed of N layers (N is an integer equal to or greater than 1), wherein a minimum value of A determined by the following formula is 0.15 or less:

[Math 3]

$$\Lambda = \left| \sum_{i=1}^{N} (d_i \times N_i \div \lambda_0) - 0.5K \right|$$

(where $d_i$ is the thickness of the $i^{th}$ layer [m], $N_i$ is a magnitude of the complex refractive index $n_i$ of the $i^{th}$ layer, $\lambda_0$ is a wavelength of the electromagnetic wave in the air [m], and K is any integer), and the complex refractive index $n_i$ of the $i^{th}$ layer is determined by the following formula, and, from the obtained complex refractive index n;, the magnitude $N_i$ thereof is obtained:

[Math 4]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{ \sqrt{2\varepsilon_i' + \sqrt{\varepsilon_i''^2 + 4\varepsilon_i'^2}} \right\} / 2$$

$$n_i'' = \frac{\varepsilon_i''}{2n_i'}$$

$$\tan\delta = \frac{\varepsilon_i''}{\varepsilon_i'}$$

(where n; is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan δ is the dielectric dissipation factor, ε;' is the relative permittivity, and ε;" is the relative dielectric loss factor).

[5] The cover according to any one of [1] to [4],

being a monolayer or a laminate composed of N layers (N is an integer equal to or greater than 1), wherein, in the following characteristic matrix formula, a magnitude $M_{11}$ of a $m_{11}$ component of TE wave at an angle of incidence of 60 ° is 0.5 or more,

[Math 5]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where $\omega$ is an angular frequency [rad/s], c is the speed of light [m/s], $n_i$ is the complex refractive index of the $i^{th}$ layer, $d_i$ is the thickness of the $i^{th}$ layer [m], $\theta_i$ is the refractive angle of an electromagnetic wave incident on the $i^{th}$ layer [rad], j is the imaginary unit, $\varepsilon_{ri}$ is the complex relative permittivity of the $i^{th}$ layer, $\mu_{ri}$ is the complex relative magnetic permeability of the $i^{th}$ layer, $n_0$ is the refractive index of the air, and $\theta_0$ is the angle of incidence [rad]).

[6] The cover according to any one of [1] to [5], wherein the magnitude $N_i$ of the complex refractive index $n_i$ is 1.8 or less.
[7] The cover according to any one of [1] to [6], wherein the cover is a monolayer or a laminate and a density of at least one layer is less than 0.90 g/cm$^3$.
[8] The cover according to any one of [1] to [7], being a laminate having a plurality of layers.
[9] The cover according to [8], wherein a maximum difference in the magnitude of the complex refractive index between adjacent layers is 0.8 or less.
[10] The cover according to [8] or [9], wherein the plurality of layers are laminated in direct contact with each other.
[11] The cover according to any one of [1] to [10],

comprising a layer made of a foam,
wherein, in 10 volume% or more of the layer made of the foam,
in a case in which the foam is not a foam formed of foam particles, a ratio (B/A) of an average value B of diameters of cells included in a range of 20% to 80% in a thickness direction from a surface of the foam relative to an average value A of diameters of cells in contact with the surface of the foam is 0.3 or more and less than 3.0, and
in a case in which the foam is a foam formed of foam particles, for foam particles that are included in a range of 10% to 90% in a thickness direction from a surface of the foam, a ratio (B'/A') of an average value B' of diameters of cells included in a range of 20% to 80% in a radial direction from surfaces of the foam particles relative to an average value A' of diameters of cells in contact with the surfaces of the foam particles is 0.3 or more and less than 3.0.

[12] The cover according to any one of [1] to [11],

comprising a layer made of a foam,
wherein, in 10 volume% or more of the layer made of the foam, a maximum cell diameter is 1.5 mm or less.

[13] The cover according to any one of [1] to [12],
being a laminate and comprising a plurality of layers comprising at least one layer having a density of less than 0.90 cm$^3$/g and at least one layer having a density of 0.90 cm$^3$/g or more.
[14] The cover according to claim 13, wherein at least one layer of layers having a density of 0.90 cm$^3$/g or more is a surface layer defining an outer surface of the cover.

(Advantageous Effect)

According to the present disclosure, it is possible to provide a cover that has a high radio wave permeability for radio waves in the frontal direction (at an angle of incidence of 0 °) and also has a high radio wave permeability for radio waves at angles of incidence in a wide range.

DETAILED DESCRIPTION

The following provides a detailed description of an embodiment of the present disclosure (hereinafter, also referred to as the "present embodiment"). However, the present disclosure is not limited to the following embodiments and may be implemented with various alterations that are within the essential scope thereof.

[Cover]

A cover of the present embodiment is characterized in that it contains a resin, and may be a single layer made of a layer containing the resin or a laminate composed of two or more layers containing the resin.

Although the number of layers forming the cover is not particularly limited, the number is preferably two or more from the viewpoint of reducing the incident angle dependence of the radio wave transmittance, improving the rigidity, and enhancing the design. The number of layers is preferably 5 or less, more preferably 3 or less, in view of ease of manufacturing and increasing the rigidity. Especially in the case where the number of the layer is 3, the first and third layers is preferably made of materials with similar values of complex refractive indices. When the above is satisfied, the values of the interfacial reflectance in the first and third layers are close, which effectively cancels out the reflected waves and facilitates higher transmittance as described below.

The layer containing the resin may be a resin plate or a foam, but at least one layer preferably includes a layer made of a foam, as described below.

Examples of the layer containing the resin also include a layer made of an adhesive-bonding agent that is commonly used to laminate resin plates or foams to each other. However, such an adhesive-bonding agent generally has a large magnitude of complex refractive index and prone to interfacial reflection and dielectric loss, etc. Thus, if an adhesive-bonding agent layer is contained, the radio wave transmittance of the entire cover is reduced. Therefore, the cover preferably does not contain an adhesive-bonding agent layer, and the resin plate or foam is preferably laminated in direct contact with the cover.

For example, pressure-sensitive bonding adhesives, bonding adhesives that cure by heat or ultraviolet light, and bonding adhesives that are applied in a molten state and solidified by cooling can be used as the above adhesive-bonding agent. Examples of resins used for the above bonding adhesive include, for example, acrylic resins, vinyl acetate resins, nitrile rubber resins, styrene butadiene rubber, chloroprene rubber, starch, epoxy resins, cyanoacrylate resins, and silicone rubber.

The thickness of the adhesive-bonding agent layer is not limited, but the thickness is preferably small from the viewpoint of minimizing the impact on the radio wave permeability.

In addition, the transparency of a cover that permits high-frequency radio waves to transmit generally tends to be reduced significantly if water or ice is contained therein or is adhered thereto. For this reason, the cover of the present embodiment may include a heater for removing water or ice, for example, in addition to the aforementioned layer containing the resin. Since heaters are generally made of a metal and have low radio wave permeability, it is preferable that the thickness is small and the line width is small to minimize the effect on the radio wave permeability as much as possible.

An ancillary layer such as a coating, a primer layer, a hard coat layer, or a water repellent treatment layer may be provided to each of the layers described above where necessary. In this case, if the effect of the ancillary layer on the radio wave transmittance is sufficiently small (e.g., if the difference of the radio wave transmittance in the frontal direction is 0.1% or less), the cover to be described later can be designed by ignoring the ancillary layer. If the effect on the radio wave transmittance is significant, the cover can be designed by treating the ancillary layer as one layer and considering the dielectric properties of each layer.

The shape of the cover is not limited and may be designed according to the shape of the electronic device that transmits and receives radio waves in which the cover is used. However, the cover is preferably plate-shaped from the viewpoint of design and reduction of the space in the electronic device. The use of the cover of the present embodiment improves the radio wave transmittance in the frontal direction and oblique direction, thereby increasing the degree of freedom in the design of the electronic device.

The size of the cover is also not limited and may be determined according to the size of the electronic device that transmits and receives radio waves in which the cover is used. However, the size of the cover is preferably sufficient to constitute a portion of the housing of the electronic device that transmits and receives radio waves, through which

radio waves are transmitted. In particular, the thickness is preferably 1 to 20 mm, more preferably 1 to 10 mm, and even more preferably 2 to 8 mm, from the viewpoint of increasing the radio wave permeability and the mechanical strength.

In addition, as mentioned above, since the cover is used to protect an electronic device that transmits and receives radio waves, the cover must have appropriate mechanical strength. For example, the load under which the cover processed to a width of 10 mm deflects by 1 mm (load at a 1-mm deflection) is preferably 0.5 N or more, more preferably 1.0 N or more, and even more preferably 3.0 N or more.

The load under which the cover deflects by 1 mm varies depending on the bending elastic modulus of the materials forming each layer, the thickness, and the joining method of layers. Among these, the load to cause deflection increases markedly as the thickness of the cover increases, but increasing the thickness generally tends to reduce radio wave permeability.

Note that the load at a 1-mm deflection (N) of the cover processed to a width of 10 mm can be specifically measured by the method described in the Examples section to be described later.

(Foam)

The foam may be a foam that is obtained through foaming of a resin composition that contains a base resin including a thermoplastic resin or a thermosetting resin and that optionally further contains additives such as a flame retardant.

The foam may, for example, be an extrusion foam, an injection foam, a bead foam (foam formed of foam particles), a stretching foam, a solvent extraction foam, or the like, which are respectively foams produced by extrusion foaming, injection foaming, bead foaming, stretch foaming, and solvent extraction foaming described further below.

Among these, a bead foam is preferable because it has good formability, the secondary processing of the foam can be omitted by preforming, the cut surface is not exposed and dust generation can be reduced, a resin and the like are prevented from penetrating into the cut surface of the foam when the form is bonded to the resin plate layer, a good appearance, adhesion, and radio wave permeability can be obtained, the mechanical strength can be increased because of the independent cell structure, and the diameters and distribution of cells can be easily controlled.

The content of the base resin when the resin composition is taken to be 100 mass% is suitably 20 mass% or more, more suitably 40 mass% or more, even more suitably 60 mass% or more, and particularly suitably 70 mass% or more, and is suitably 100% or less, and more suitably 95% or less. To reduce the dielectric constant and the dielectric dissipation factor, the base resin is made preferably made of a resin having a low polarity.

Examples of thermoplastic resins that may be used include a polyphenylene ether-based resin, a polystyrene-based resin, a polyethylene-based resin, a polyamide-based resin, a polypropylene-based resin, an ABS resin, a vinyl chloride-based resin, an acrylic resin, a methyl methacrylate resin, a nylon-based resin, a fluororesin, a polycarbonate-based resin, a polyurethane resin, and a polyester-based resin, with a polyphenylene ether-based resin, a polystyrene-based resin, a polyethylene-based resin, a polyamide-based resin, a polypropylene-based resin, an acrylic resin, or a polycarbonate-based resin being preferable from a viewpoint of heat resistance, economy, and foaming properties.

One of these may be used individually, or two or more of these may be used in combination.

Note that the method by which the relative permittivity and the dielectric dissipation factor tan $\delta$ of the base resin used in the foam are reduced may be the one by selecting a resin having a low non-foamed resin density, a resin having a low non-foamed resin polarity, a resin having few polar groups at terminals of molecular chains, or the like as the base resin. Examples of resins that are particularly suitable from this viewpoint include a polyolefin-based resin, a polystyrene-based resin, a polyphenylene ether-based resin, a polyimide-based resin, a fluororesin, a polymer liquid-crystal resin, and a polyphenylene sulfide-based resin. Of these resins, a polyolefin-based resin, a polystyrene-based resin, and a polyphenylene ether-based resin are preferable when taking into account viewpoints of processability, cost, and flame retardance.

The polyphenylene ether (PPE) based resin may be a polymer represented by general formula (1), described below.

In formula (1), $R^1$, $R^2$, $R^3$, and $R^4$ each indicate, independently of one another, a hydrogen atom, a halogen atom, an alkyl group, an alkoxy group, a phenyl group, or a haloalkyl group or haloalkoxy group having at least two carbon atoms between a halogen and the benzene ring in general formula (1) and not including a tertiary $\alpha$-carbon atom. Moreover, n in formula (1) is an integer that represents the degree of polymerization.

[Chem. 1]

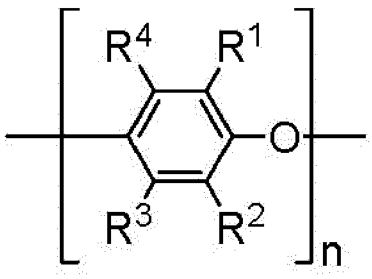

(1)

Examples of polyphenylene ether-based resins that may be used include, but are not limited to, poly(2,6-dimethyl-1,4-phenylene) ether, poly(2,6-diethyl-1,4-phenylene) ether, poly(2-methyl-6-ethyl-1,4-phenylene) ether, poly(2-methyl-6-propyl-1,4-phenylene) ether, poly(2,6-dipropyl-1,4-phenylene) ether, poly(2-ethyl-6-propyl-1,4-phenylene) ether, poly(2,6-dibutyl-1,4-phenylene) ether, poly(2,6-dilauryl-1,4-phenylene) ether, poly(2,6-diphenyl-1,4-diphenylene) ether, poly(2,6-dimethoxy-1,4-phenylene) ether, poly(2,6-diethoxy-1,4-phenylene) ether, poly(2-methoxy-6-ethoxy-1,4-phenylene) ether, poly(2-ethyl-6-stearyloxy-1,4-phenylene) ether, poly(2,6-dichloro-1,4-phenylene) ether, poly(2-methyl-6-phenyl-1,4-phenylene) ether, poly(2,6-dibenzyl-1,4-phenylene) ether, poly(2-ethoxy-1,4-phenylene) ether, poly(2-chloro-1,4-phenylene) ether, and poly(2,6-dibromo-1,4-phenylene) ether. Of these polyphenylene ether-based resins, those for which $R^1$ and $R^2$ are each an alkyl group having a carbon number of 1 to 4 and $R^3$ and $R^4$ are each a hydrogen or an alkyl group having a carbon number of 1 to 4, in particular, are preferable.

One of these may be used individually, or two or more of these may be used in combination.

The content of a polyphenylene ether-based resin in the present embodiment is preferably 20 mass% to 80 mass%, more preferably 30 mass% to 70 mass%, and even more preferably 35 mass% to 60 mass% relative to 100 mass% of the base resin. It is easier to obtain excellent heat resistance and flame retardance and to reduce the relative permittivity and the dielectric dissipation factor when the content of a PPE-based resin is 20 mass% or more. Moreover, it is easier to obtain excellent processability when the content of a PPE-based resin is 80 mass% or less.

The weight-average molecular weight (Mw) of the polyphenylene ether-based resin is preferably 20,000 to 60,000.

Note that the weight-average molecular weight (Mw) is the weight-average molecular weight that is determined by performing measurement of the resin by gel permeation chromatography (GPC) and determining the molecular weight of a peak in the chromatogram using a calibration curve that has been determined through measurement of commercially available standard polystyrenes (i.e., prepared using peak molecular weights of the standard polystyrenes).

The polystyrene-based resin is a homopolymer of styrene or a styrene derivative or a copolymer having styrene or a styrene derivative as a main component (component contained in a proportion of 50 mass% or more in the polystyrene-based resin).

The styrene derivative may be o-methylstyrene, m-methylstyrene, p-methylstyrene, t-butylstyrene, α-methylstyrene, β-methylstyrene, diphenylethylene, chlorostyrene, bromostyrene, or the like.

Examples of polystyrene-based resins that are homopolymers include polystyrene, poly(a-methylstyrene), and polychlorostyrene.

Examples of polystyrene-based resins that are copolymers include binary copolymers such as styrene-butadiene copolymer, styrene-acrylonitrile copolymer, styrene-maleic acid copolymer, styrene-maleic anhydride copolymer, styrene-maleimide copolymer, styrene-N-phenylmaleimide copolymer, styrene-N-alkylmaleimide copolymer, styrene-N-alkyl-substituted phenylmaleimide copolymer, styrene-acrylic acid copolymer, styrene-methacrylic acid copolymer, styrene-methyl acrylate copolymer, styrene-methyl methacrylate copolymer, styrene-n-alkyl acrylate copolymer, styrene-N-alkyl methacrylate copolymer, and ethyl vinyl benzene-divinylbenzene copolymer; ternary copolymers such as ABS and butadiene-acrylonitrile-α-methylbenzene copolymer; and graft copolymers such as styrene-grafted polyethylene, styrene-grafted ethylene-vinyl acetate copolymer, (styrene-acrylic acid)-grafted polyethylene, and styrene-grafted polyamide.

One of these may be used individually, or two or more of these may be used in combination.

The polyethylene-based resin may be a resin of high-density polyethylene, low-density polyethylene, linear low-density polyethylene, copolymer of ethylene and an α-olefin, propylene-ethylene copolymer, or the like.

One of these may be used individually, or two or more of these may be used in combination.

Moreover, these polyethylene-based resins may have a structure that is suitably cross-linked through a cross-linker or the like.

The polyamide-based resin may be a polyamide, a polyamide copolymer, or a mixture thereof, for example. The polyamide-based resin may include a polymer obtained through self-condensation of an aminocarboxylic acid, ring-opening polymerization of a lactam, or polycondensation of a diamine and a dicarboxylic acid.

The polyamide may be nylon 66, nylon 610, nylon 612, nylon 46, nylon 1212, or the like that is obtained through polycondensation of a diamine and a dicarboxylic acid, or may be nylon 6, nylon 12, or the like that is obtained through ring-opening polymerization of a lactam.

The polyamide copolymer may be nylon 6/66, nylon 66/6, nylon 66/610, nylon 66/612, nylon 66/6T (T represents a terephthalic acid component), nylon 66/6I (I represents an isophthalic acid component), nylon 6T/6I, or the like, for example.

The mixture of any of these polymers may be a mixture of nylon 66 and nylon 6, a mixture of nylon 66 and nylon 612, a mixture of nylon 66 and nylon 610, a mixture of nylon 66 and nylon 6I, a mixture of nylon 66 and nylon 6T, or the like, for example.

One of these may be used individually, or two or more of these may be used in combination.

The content of any of these thermoplastic resins other than PPE-based resins in the present embodiment is preferably 10 mass% to 100 mass%, and more preferably 20 mass% to 80 mass% relative to 100 mass% of the base resin from a viewpoint of processability of the foam.

Examples of thermosetting resins that may be used include a phenolic resin, an epoxy resin, an unsaturated polyester resin, a polyurethane, and a melamine resin, with a phenolic resin or a melamine resin being preferable.

One of these may be used individually, or two or more of these may be used in combination.

Examples of additives that may be used include flame retardants, flame retardant synergists, heat stabilizers, antioxidants, antistatic agents, inorganic fillers, anti-dripping agents, ultraviolet absorbers, light absorbers, plasticizers, mold release agents, dyes/pigments, rubber components, and resins other than the base resin, and these additives may be added to the extent that the effects disclosed herein are not lost.

The content of additives when the base resin is taken to be 100 parts by mass is suitably 0 parts by mass to 40 parts by mass, and more suitably 5 parts by mass to 30 parts by mass.

Examples of flame retardants that may be used include organic flame retardants and inorganic flame retardants without any specific limitations.

Examples of organic flame retardants include halogenated compounds, representative examples of which are bromine compounds, phosphorus-based compounds, and non-halogenated compounds representative examples of which are and silicone-based compounds.

Examples of inorganic flame retardants include metal hydroxides, representative examples of which are aluminum hydroxide and magnesium hydroxide, and antimony-based compounds, representative examples of which are antimony trioxide and antimony pentoxide.

One of these may be used individually, or two or more of these may be used in combination.

Of these flame retardants, non-halogenated flame retardants that are organic flame retardants are preferable from an environmental perspective, with phosphorus-based flame retardants and silicone-based flame retardants being more preferable.

A flame retardant that includes phosphorus or a phosphorus compound can be used as a phosphorus-based flame retardant. The phosphorus may be red phosphorus. The phosphorus compound may be a phosphate ester, a phosphazene compound having a bond between a phosphorus atom and a nitrogen atom in a main chain thereof, or the like.

Examples of phosphate esters that may be used include trimethyl phosphate, triethyl phosphate, tripropyl phosphate, tributyl phosphate, tripentyl phosphate, trihexyl phosphate, tricyclohexyl phosphate, triphenyl phosphate, tricresyl phosphate, trixylenyl phosphate, cresyl diphenyl phosphate, dicresyl phenyl phosphate, dimethyl ethyl phosphate, methyl dibutyl phosphate, ethyl dipropyl phosphate, hydroxyphenyl diphenyl phosphate, and resorcinol bis(diphenyl phosphate). Moreover, phosphate ester compounds of a type obtained through modification of any of the preceding examples with any of various substituents and various condensation-type phosphate ester compounds may be used.

Of these examples, triphenyl phosphate and condensation-type phosphate ester compounds are preferable from viewpoints of heat resistance, flame retardance, and foaming properties.

One of these may be used individually, or two or more of these may be used in combination.

The silicone-based flame retardant may be a (mono or poly)organosiloxane.

Examples of (mono or poly)organosiloxanes include monoorganosiloxanes such as dimethylsiloxane and phenylmethylsiloxane; polydimethylsiloxane and polyphenylmethylsiloxane that are obtained through polymerization of these monoorganosiloxanes; and organopolysiloxanes such as copolymers of these monoorganosiloxanes.

In the case of an organopolysiloxane, a bonding group of a main chain and branched side chain thereof may be a hydrogen, an alkyl group, or a phenyl group, and is preferably a phenyl group, a methyl group, an ethyl group, or a propyl group, but is not limited thereto. Moreover, a terminal bonding group may be a hydroxy group, an alkoxy group, an alkyl group, or a phenyl group. The form of the silicone may be in any form such as an oil form, gum form, varnish

form, powder form, or pellet form without any specific limitations.

One of these may be used individually, or two or more of these may be used in combination.

The content of the flame retardant may be set within the range for content of an additive, and, when the base resin is taken to be 100 parts by mass, is suitably 0 parts by mass to 30 parts by mass, and more suitably 5 parts by mass to 25 parts by mass. Although adding more of a flame retardant makes it easier to obtain an effect of improving flame retardance of the foam, the addition of a flame retardant generally tends to increase the relative permittivity and the dielectric dissipation factor.

Examples of rubber components that may be used include butadiene, isoprene, 1,3-pentadiene, and the like, but are not limited thereto. Such a rubber component is preferably a component that is dispersed in a particulate form in a continuous phase formed of a polystyrene-based resin. The method by which any of these rubber components is added may be by adding the rubber component itself or by using a resin such as a styrene-based elastomer and a styrene-butadiene copolymer as a rubber component supply source.

In a case in which a rubber component is added, the content of the rubber component may be set within the range for the content of an additive, and, when the base resin is taken to be 100 parts by mass, is preferably 0.3 parts by mass to 15 parts by mass, more preferably 0.5 parts by mass to 8 parts by mass, and even more preferably 1 part by mass to 5 parts by mass. When the content is 0.3 parts by mass or more, it is easy to obtain a foam having excellent resin flexibility and extension, a low tendency for foam cell membranes to rupture during foaming, and excellent shaping processability and mechanical strength.

In the present embodiment, although adding more of a flame retardant to the resin composition is preferable for improving flame retardance of the cover, increasing the additive amount of the flame retardant has a negative influence on foaming properties. In such a situation, a rubber component may suitably be used in order to impart foaming properties to the resin composition. In particular, the rubber component described above is important in bead foaming in which the temperature is gradually increased from normal temperature and in which a resin is foamed in a non-molten state.

(Production method of foam)

The method by which the foam according to the present embodiment is produced is not specifically limited and may be extrusion foaming, injection foaming, bead foaming (in-mold foaming), stretch foaming, solvent extraction foaming, or the like, for example.

Extrusion foaming is a method in which an organic or inorganic blowing agent is pressurized into a molten resin using an extruder and then pressure is released at an outlet of the extruder to obtain a foam in a plate, sheet, or columnar form having a fixed cross-sectional shape.

Injection foaming is a method in which a resin having foaming properties is injection molded and is foamed inside a mold so as to obtain a foam including pores.

Bead foaming (in-mold foaming) is a method in which foam particles are loaded into a mold and are then heated by steam or the like so as to cause expansion of the foam particles and, simultaneously thereto, thermal fusion of the foam particles to one another to thereby obtain a foam.

Stretch foaming is a method in which an additive such as a filler is kneaded in a resin in advance and then the resin is stretched so as to form microvoids and thereby produce a foam.

Solvent extraction foaming is a method in which an additive that dissolves in a specific solvent is added to a resin in advance and then a shaped product is immersed in the specific solvent so as to extract the additive and thereby produce a foam.

In the case of extrusion foaming, the obtained foam has a plate form, sheet form, or the like and thus a punching step of cutting the foam to a desired shape and a thermal bonding step of bonding the cut-out parts are required in order to process the foam.

In contrast, it is easy to shape a foam into a finer shape or a more complicated shape in the case of bead foaming because a mold of a desired shape can be produced and then foam particles can be loaded into the mold and be shaped.

Although shaping of a foam with a complicated shape is also possible in the case of injection foaming, it is easier to increase the expansion ratio of the foam and to achieve flexibility in addition to thermal insulation in the case of bead foaming.

A typically used gas can be used as a blowing agent without any specific limitations.

Examples of blowing agents that may be used include inorganic gases such as air, carbon dioxide gas, nitrogen gas, oxygen gas, ammonia gas, hydrogen gas, argon gas, helium gas, and neon gas; fluorocarbons such as trichlorofluoromethane (R11), dichlorodifluoromethane (R12), chlorodifluoromethane (R22), tetrachlorodifluoroethane (R112), dichlorofluoroethane (R141b), chlorodifluoroethane (R142b), difluoroethane (R152a), HFC-245fa, HFC-236ea, HFC-245ca, and HFC-225ca; saturated hydrocarbons such as propane, n-butane, i-butane, n-pentane, i-pentane, and neopentane; ethers such as dimethyl ether, diethyl ether, methyl ethyl ether, isopropyl ether, n-butyl ether, diisopropyl ether,

furan, furfural, 2-methylfuran, tetrahydrofuran, and tetrahydropyran; ketones such as dimethyl ketone, methyl ethyl ketone, diethyl ketone, methyl n-propyl ketone, methyl n-butyl ketone, methyl i-butyl ketone, methyl n-amyl ketone, methyl n-hexyl ketone, ethyl n-propyl ketone, and ethyl n-butyl ketone; alcohols such as methanol, ethanol, propyl alcohol, i-propyl alcohol, butyl alcohol, i-butyl alcohol, and t-butyl alcohol; carboxylic acid esters such as formic acid methyl ester, formic acid ethyl ester, formic acid propyl ester, formic acid butyl ester, formic acid amyl ester, propionic acid methyl ester, and propionic acid ethyl ester; and chlorinated hydrocarbons such as methyl chloride and ethyl chloride.

One of these may be used individually, or two or more of these may be used in combination.

The blowing agent preferably displays little or no combustibility and combustion support from a viewpoint of flame retardance, and is more preferably an inorganic gas from a viewpoint of gas safety. An inorganic gas has a low tendency to dissolve in a resin compared to an organic gas such as a hydrocarbon and can easily escape from a resin after a foaming step or shaping step, which is beneficial in providing better dimensional stability over time of the foam after shaping. Moreover, in a situation in which an inorganic gas is used, this has a benefit that plasticization of a resin due to residual gas tends not to occur and that excellent heat resistance can be displayed at an earlier stage without going through a step of aging or the like. Of inorganic gases, carbon dioxide gas is preferable from viewpoint of solubility in a resin and ease of handling. Hydrocarbon-based organic gases generally have high combustibility and tend to cause poorer flame retardance when they remain in a foam.

The foam according to the present embodiment is preferably produced by the bead foaming described above and is preferably formed of foam particles.

By performing shaping by bead foaming, it is possible to improve formability of the cover.

The foam particles used in bead foaming can be obtained by causing the inclusion (impregnation) of a blowing agent in a base resin and then causing foaming to occur. More specifically, the foam particles may be produced by, for example, in accordance with a method described in Example 1 of JP H04-372630 A, loading a base resin (pellets, beads, etc.) into a pressure-resistant vessel, purging gas inside the vessel with dry air, injecting a blowing agent (gas), impregnating the base resin with the blowing agent (gas), and subsequently releasing the pressure and transferring the base resin pellets from the pressure-resistant vessel to a foaming furnace where they are heated and caused to foam through pressurized steam while rotating an impeller.

Although no specific limitations are placed on the conditions under which the base resin is impregnated with the foaming agent (gas), an impregnation pressure of 0.3 MPa to 30 MPa, an impregnation temperature of -20 °C to 100 °C, and an impregnation time of 10 minutes to 96 hours, for example, are preferable from a viewpoint of causing impregnation of the base resin with the blowing agent (gas) to proceed more efficiently. Moreover, the maximum vapor pressure of pressurized steam inside the foaming furnace is preferably 30 kPa·G to 700 kPa G from a viewpoint of more easily obtaining the desired expansion ratio and achieving a better external appearance.

In the production method of the foam particles described above, the time from when release of pressure inside of the pressure-resistant vessel (release of impregnation pressure) is completed up until when heating by pressurized steam inside the foaming furnace starts is preferably less than 600 seconds, more preferably 300 seconds or less, even more preferably within 120 seconds, and particularly preferably within 60 seconds. When this time is within any of the ranges set forth above, a more uniform cell diameter can be achieved and an increase of the cell diameter can be prevented because gas impregnated in the base resin can be inhibited from spreading out unevenly in the base resin.

The method by which a foam is shaped using the foam particles is not specifically limited and may, for example, be a method in which the foam particles are loaded into a cavity of a shaping mold, are heated so as to cause expansion and, simultaneously thereto, thermal fusion of the foam particles to one another, and then cooling is performed to solidify the product and perform shaping. A commonly known method can be adopted as the loading method of the foam particles without any specific limitations.

The foam particles are preferably subjected to pressurization treatment with a gas prior to being loaded into the cavity of the shaping mold. By providing a fixed gas pressure inside cells of the expanded particles, it is possible to cause strong fusion of constituent expanded particles of the resultant foam and to enhance the rigidity and external appearance of a molded article. The gas used in the pressurization treatment is not specifically limited but is preferably air and an inorganic gas from a viewpoint of ease of handling and economy. The method of pressurization treatment is not specifically limited and may be a method in which the foam particles are loaded into a pressurization vessel, pressurized gas is introduced, and the gas is supplied to inside of the pressurization vessel by increasing the pressure to a maximum pressure of 0.1 MPa to 20 MPa over 10 minutes to 96 hours.

The method of heating during shaping of the foam particles may be heating using a heating medium such as steam, heating by a heater such as an IR heater, heating using microwaves, or the like. In the case of heating using a heating medium, a general purpose heating medium may be used, with steam being preferable from a viewpoint of efficiently heating the resin.

The method by which the foam is processed into a desired shape in the present embodiment is not specifically limited and may be a method in which foam particles or a molten resin is loaded into a mold and is shaped, a method in which the foam is cut by a blade such as a saw blade and die-cutting blade, a method in which machining is performed

by a mill, or a method in which a plurality of foams are adhered through heating or an adhesive-bonding agent.

The expansion ratio of the foam is preferably 1.2 ($cm^3/g$) or more, more preferably 1.5 ($cm^3/g$) or more, and even more preferably 1.7 ($cm^3/g$) or more, from the viewpoint that the magnitude of the complex refractive index is reduced by reducing the relative permittivity and the dielectric dissipation factor, which facilitates increasing the transmittance of radio waves and reducing the incident angle dependency of the radio wave transmittance. In addition, from the viewpoint of improving the mechanical strength, the expansion ratio of the foam is preferably 30 ($cm^3/g$) or less, more preferably 15 ($cm^3/g$) or less, and even more preferably 10 ($cm^3/g$) or less.

The shape, the size, the thickness, and the like of the foam is not particularly limited and may be determined according to the shape, the size, the thickness, and the like of the cover, but the thickness is preferably 1 to 20 mm, more preferably 2 to 10 mm, and even more preferably 2 to 8 mm from the viewpoint of ensuring mechanical strength while increasing the radio wave permeability.

Note that the expansion ratio of the foam can specifically be measured by a method described in the EXAMPLES section to be described later.

(Resin plate)

Examples of the resin that forms the resin plate include thermoplastic resins and thermosetting resins mentioned above, for example, of which polyamide resins, polyester resins, polypropylene resins, polystyrene resins, polycarbonate resins, modified polyphenylene ether resins, and the like are suitable from the viewpoint of the mechanical strength and the radio wave permeability.

The resin plate may optionally contain further additives mentioned above such as a flame retardant, glass fibers, and carbon fibers, which generally tends to increase the relative permittivity and the dielectric dissipation factor. Hence, it is preferable that the above additives, glass fibers and carbon fibers are not contained or the amount is small for improving the radio wave permeability and reduce scattering, refraction, and the like.

The shape, the size, the thickness, and the like of the resin plate is not limited and may be determined according to the shape, the size, the thickness, and the like of the cover, but from the viewpoint of improving the radio wave permeability while increasing the mechanical strength, the thickness is preferably 0.1 to 5 mm, more preferably 0.3 to 3 mm.

The method of manufacturing the resin sheet is not particularly limited. For example, known heat press methods such as injection molding, extrusion sheet molding, sheet molding using heat rolls, and the like can be used.

(Radio wave transmittance of cover)

With regards to the radio wave transmittance, the cover of the present embodiment satisfies the relationship of the following formula:

$$(100 - \text{frontal transmittance X}) \times (100 - \text{oblique transmittance Y}) < 55$$

(where the frontal transmittance X (%) is the radio wave transmittance at an angle of incidence of 0 ° of the cover at a frequency f (Hz), and the oblique transmittance Y (%) is the radio wave transmittance of TE wave at an angle of incidence of 60 ° of the cover at the frequency f (Hz)).

The value expressed by the above formula is less than 55, preferably 50 or less, more preferably 45 or less, and even more preferably 40 or less. In principle, the transmittance of TE wave is more dependent on the angle of incidence than the transmittance of TM waves, and the radio wave transmittance of TE wave generally tends to decrease as the angle of incidence increases. However, when the radio wave transmittance of TE wave at 60 ° is high, the decrease in the radio wave transmittance of TE wave due to an increase in the angle of incidence in the range of 0 to 60 ° tends to be suppressed. Of the above values, the value expressed by (100 - frontal transmittance X) is highly dependent on the frontal transmittance, and the value expressed by (100 - oblique transmittance Y) reflects the angular dependence of transmittance. Thus, when the above values are within the ranges, the transmittance in the frontal direction tends to be high and the incident angle dependence tends to be reduced.

In this application, an angle of incidence refers to the angle between the direction normal to the tangent plane and the direction of incidence of a radio wave on the surface of the cover of interest. In addition, in the case where a part of the cover where radio waves enter is not a simple flat plate shape but has a shape with multiple curved surfaces, the part is divided into minute sections and the radio wave transmittance shall be calculated and examined for each section.

Furthermore, with regard to the radio wave transmittance, the cover of the present embodiment preferably satisfies the relationship of the following formula.

$$| \text{frontal transmittance } X - \text{oblique transmittance } Y | < 25$$

The above absolute value of the difference between the frontal transmittance X and the oblique transmittance Y (| frontal transmittance X - oblique transmittance Y |) is preferably less than 20%, more preferably 18% or less, and even more preferably less than 15%. Since, in principle, the transmittance of TE wave is more dependent on the angle of incidence than that of TM wave, if the absolute value of the difference between the oblique transmittance Y, which is the radio wave transmittance of TE wave, and the frontal transmittance X is small as in the above range, the overall incident angle dependency is reduced and the cover having a high radio wave permeability for a wide range of angles of incidence is obtained. In general, the radio wave transmittance of TE wave tends to decrease as the angle of incidence increases. However, if the radio wave transmittance of TE wave at 60 ° is high, the decrease in the radio wave transmittance of TE wave with an increase in the angle of incidence tends to be suppressed in the range of 0 to 60 °. When the absolute value of the difference between the frontal transmittance X and the oblique transmittance Y exceeds the aforementioned range, the incident angle dependence tends to increase in the range of 0 to 60 °.

The frontal transmittance X can be controlled, for example, by adjusting the complex refractive index and/or the thickness of each layer forming the cover. The frontal transmittance X is increased when the difference between the magnitude of the $m_{12}$ component and the magnitude of the $m_{21}$ component of the frontal direction characteristic matrix or the minimum value of A, which will be described below, is reduced. In addition, the oblique transmittance Y can be controlled, for example, by adjusting the complex refractive index and/or the thickness of each layer forming the cover and the magnitude (absolute value) M11 of the $m_{11}$ component of TE wave at an angle of incidence of 60 ° in the characteristic matrix to be described below. The oblique transmittance Y can be increased by reducing the complex refractive index, adjusting the layer structure, reducing the magnitude $M_{11}$ of the $m_{11}$ component in the above characteristic matrix, and so on.

The frontal transmittance X of the cover of the present embodiment at a specific frequency of a radio wave is preferably 85% or more, more preferably 90% or more, even more preferably 95% or more, and most preferably 97% or more.

In this specification, the "specific frequency of a radio wave" refers to a certain frequency of a radio wave transmitted from or received by an electronic device. In general, because the directivity and the attenuation of radio waves increase and the angular dependence of the radio wave transmittance of the cover increases with an increase of the frequency, the cover of the present embodiment is particularly suitable at frequencies from 1 to 100 GHz.

In addition, the oblique transmittance Y at a specific frequency of a radio wave is preferably 70% or more, more preferably 80% or more, even more preferably 85%, and even more preferably 90% or more. When the oblique transmittance Y at a specific frequency of a radio wave is in the above range, the angular dependence of transmittance tends to be smaller, and it becomes easier to maintain high transmittance over a wide range of angles. In addition, even in cases where the shape of the part of the cover through which radio waves enter is not only plate-like but also has curved surfaces or corners, the small angular dependence of transmittance mitigates the effects of the shape, thereby increasing the degree of freedom in the size and the design of the cover and an electronic device.

Note that the frontal transmittance X and the oblique transmittance Y described above can be obtained by measuring the radio wave attenuation of the cover in a known method, by measuring the relative permittivity, the dielectric property, the layer structure, the thickness, and the like in known methods and calculating the radio wave transmittance from the information obtained (for example, by calculating the reflection coefficient and the transmission coefficient from the characteristic matrix to be described below and converting them to the transmittance and the reflectance, or by the other methods. For example, they can be measured by the method described in the Examples section to be described later.

From the viewpoint of increasing the radio wave permeability and from the viewpoint that transmission/reception accuracy of a device that receives radio waves tends to be reduced influenced by reflected waves, the frontal reflectance (radio wave reflectance at an angle of incidence of 0 °) at a specific frequency of a radio wave of the cover of the present embodiment is preferably 10% or less, more preferably 5% or less, even more preferably 3% or less.

Similarly, from the viewpoint of increasing the radio wave permeability, from the viewpoint that transmission/reception accuracy of a device that receives radio waves tends to be reduced influenced by reflected waves, and from the viewpoint of increasing the radio wave permeability for radio waves at angles of incidence in a wide range, the oblique reflectance at a specific frequency of a radio wave (reflectance of TE wave at an angle of incidence of 60 °) is preferably 30% or less, more preferably 20% or less, and even more preferably 15% or less.

Note that the frontal reflectance and the oblique reflectance described above can be obtained by measuring the reflection attenuation of the cover using a known method, by measuring the relative permittivity, the dielectric property, the layer structure, the thickness, and the like in known methods and calculating the radio wave reflectance from the information obtained (for example, by calculating the reflection coefficient and the transmission coefficient from the characteristic matrix to be described below and converting them to the transmittance and the reflectance), or by the other methods. For example, they can be measured by the method described in the Examples section to be described later.

If interfacial reflections occur at the interface between adjacent layers of the cover and at the interface between the surface layer of the cover and the air layer (surface of the cover) when radio waves pass through the cover and interference caused by the reflected waves strengthens each other, the effect of reflection increases and the transmittance of radio waves decreases. In addition, the interfacial reflection tends to increase as the difference of the magnitudes of the complex refractive indices between the incidence side layer and the transmission side layer at the interface.

For example, for radio waves mainly from the frontal direction (radio waves incident at an angle of incidence of 0 °), if the thickness of one layer is close to an integer multiple of half the wavelength of a radio wave transmitting through the layer, reflected waves generated at each interface (each surface of the layer) cancel out each other and the reflectance can be reduced. In the case of a laminate composed of multiple layers, interference caused by reflection is reduced because the reflected waves are weakened at each interface as a whole. In general, the interface between the surface layer of the cover and the air layer tends to have the largest difference in the magnitude of the complex refractive index, and the interface reflection tends to be large. Therefore, it is preferable to configure the cover in such a manner that the reflected waves, in particular those generated in the surface layer, weaken each other.

For that reason, the minimum value of A determined by the following formula is preferably 0.15 or less when the cover of the present embodiment is a monolayer or a laminate composed of N layers (N is an integer of 1 or more).

[Math 6]

$$\Lambda = \left| \sum_{i=1}^{N} (d_i \times N_i \div \lambda_0) - 0.5K \right|$$

(where $d_i$ is the thickness of the $i^{th}$ layer [m], $N_i$ is the magnitude of the complex refractive index $n_i$ of the $i^{th}$ layer, $\lambda_0$ is the wavelength of the electromagnetic wave in the air [m], and K is any integer)

The above minimum value of A is preferably 0.15 or less, more preferably 0.12 or less, and even more preferably 0.10 or less. When the minimum value of A is in the above range, the weakening of reflected waves is enhanced for radio waves mainly from the frontal direction (radio waves incident at an angle of incidence of 0 °), and reflected waves can be reduced, resulting in a cover with high frontal transmittance X and high radio wave permeability as described above.

In cases where the cover is a laminate composed of multiple layers, the interfacial reflection caused by the attenuation and refraction of radio waves and the difference in magnitude of complex refractive indices of adjacent layers is increased when the cover includes a layer made of an adhesive-bonding agent generally having a large magnitude of complex refractive index (large relative permittivity and dielectric dissipation factor) (layers are laminated and bonded with each other via an adhesive-bonding agent, or the like). Therefore, the cover preferably does not contain any layers made of an adhesive-bonding agent (each layer is laminated in direct contact with each other without any adhesive or the like).

Each layer of the cover has a magnitude $N_i$ of the complex refractive index $n_i$ of preferably 1.8 or less, more preferably 1.6 to 1.0, and even more preferably 1.5 to 1.0 at a specific frequency of a radio wave. When the magnitude $N_i$ of the complex refractive index of each layer of the cover is in the above range, it becomes easy to reduce the interfacial reflection, to improve the transmittance in the frontal direction, to reduce the angular dependence of the radio wave transmittance, to reduce the difference in the complex refractive index between the adjacent interfaces, and to minimize the change in the value of A by an increase or decrease in the thickness $d_i$ of each layer, which allows for a larger design margin for the thickness of each layer, thereby improving production stability and reducing the angular dependence of the electromagnetic wave transmittance.

In addition, the maximum difference in the magnitude of the complex refractive index between adjacent layers (including the layers between the air layer and the surface layer) is preferably 0.8 or less, more preferably 0.6 or less, and even more preferably 0.5 or less. When the maximum difference in the magnitude of the complex refractive index between adjacent layers is in the above range, the interfacial reflection at the interface between adjacent layers is reduced, which facilitates improvement of the radio wave transmittance and reduces the incident angle dependency of the radio wave transmittance. When there are multiple interlayers, it is preferable that the difference in the magnitude of the complex refractive index is small not only in the interlayers with the largest difference in magnitude of the complex refractive index, but also between the other interlayers.

In this specification, "adjacent layers" means layers that are adjacent to each other and composes the cover, and shall also include the air layer in contact with the surface of the cover.

The complex refractive index of each layer of the cover (complex refractive index $n_i$ of the layer i) can be measured by any of known methods and can be calculated from the relative permittivity and the dielectric dissipation

factor according to the following formula. The magnitude $N_i$ can be calculated from the obtained complex refractive index $n_i$.

[Math 7]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where $n_i$ is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan δ is the dielectric dissipation factor, ε;' is the relative permittivity, and ε;" is the relative dielectric loss factor).

In cases where the cover of the present embodiment is a single layer or a laminate composed of N layers (N is an integer of 1 or more), the absolute value of the difference between the magnitude $M_{12}$ of the $m_{12}$ component and the magnitude of the $m_{21}$ component $M_{21}$ ($|M_{12} - M_{21}|$) in the frontal direction (at an angle of incidence of 0 °) is preferably 0.35 or less at a specific frequency of a radio wave as expressed by the following formula.

$$|M_{12} - M_{21}| \leq 0.35$$

(where $M_{12}$ is the magnitude of the characteristic matrix $m_{12}$ component in the frontal direction, $M_{21}$ is the magnitude of the characteristic matrix $m_{21}$ component in the frontal direction)

The above value is preferably 0.35 or less, more preferably 0.30 or less, and further preferably 0.25 or less. When the value is within this range, it becomes easier to reduce the reflectance in the frontal direction, thus making it easier to improve the radio wave transmittance of the cover and preventing the reduction in transmission/reception accuracy of a device that transmits and receives radio waves due to reflected waves. Each component of the characteristic matrix can be adjusted by adjusting the relative permittivity, the dielectric dissipation factor, the thickness, and the layer structure of each layer, as indicated in the following formula.

[Math 8]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where $\omega$ is an angular frequency [rad/s], c is the speed of light [m/s], $n_i$ is the complex refractive index of the $i^{th}$ layer, $d_i$ is the thickness of the $i^{th}$ layer [m], $\theta_i$ is the refractive angle of an electromagnetic wave incident on the $i^{th}$ layer [rad], j is the imaginary unit, $\varepsilon_{ri}$ is the complex relative permittivity of the $i^{th}$ layer, $\mu_{ri}$ is the complex relative magnetic permeability of the $i^{th}$ layer, $n_0$ is the refractive index of the air, and $\theta_0$ is the angle of incidence [rad])

A more suitable embodiment is one with at least one layer made of a foam. When the material consists only of materials having a relatively high relative permittivity and dielectric dissipation factor, such as a single resin layer, it is possible to improve the radio wave transmittance in the frontal direction by appropriately designing the dielectric property and the thickness of each layer, but the high relative permittivity and dielectric dissipation factor tend to cause reduction in the radio wave transmittance in the oblique direction. On the other hand, the inclusion of at least one foam layer enhances the radio wave permeability in the frontal direction while also increasing the radio wave permeability in the oblique direction.

In addition, the cover having at least one foam layer, which is a more suitable embodiment of the above, can reduce the average refractive index of the cover as a whole by inclusion of the at least one layer of foam. Therefore, even if the cover is designed to have a high radio wave transmittance in the frontal direction as described above, the radio wave transmittance in the oblique direction tends to be high because the difference in optical distance between the frontal direction and the oblique direction can be reduced. As a more specific design, the magnitude $M_{11}$ of the $m_{11}$ component of TE wave at an angle of incidence of 60 ° is preferably 0.5 or more in the following characteristic matrix formula in the characteristic matrix method at a specific frequency of a radio wave, when the cover has a single layer or a laminate composed of N layers (N is an integer of 1 or greater).

[Math 9]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where $\omega$ is an angular frequency [rad/s], c is the speed of light [m/s], $n_i$ is the complex refractive index of the $i^{th}$ layer,

$d_i$ is the thickness of the $i^{th}$ layer [m], $\theta_i$ is the refractive angle of an electromagnetic wave incident on the $i^{th}$ layer [rad], j is the imaginary unit, $\varepsilon_{ri}$ is the complex relative permittivity of the $i^{th}$ layer, $\mu_{ri}$ is the complex relative magnetic permeability of the $i^{th}$ layer, $n_0$ is the refractive index of the air, and $\theta_0$ is the angle of incidence [rad])

The magnitude (absolute value) of each component in the above characteristic matrix formula correlates with the radio wave transmittance and radio wave reflectance of the cover, and the magnitude $M_{11}$ of the $m_{11}$ component in the above characteristic matrix formula is preferably 0.5 or more, more preferably 0.6 to 1.4, and even more preferably 0.65 to 1.3. When the magnitude $M_{11}$ of the $m_{11}$ component in the above characteristic matrix is in the above range, the oblique transmittance Y described above tends to be high, resulting in a cover that exhibits high radio transmission over a wide range of angles of incidence. Each component of the characteristic matrix can be adjusted by adjusting the relative permittivity, the dielectric dissipation factor, the thickness, and the layer structure of each layer, as indicated in the following formula.

Note that, in a cover composed of a laminate of N layers with N = 2 or more, the $m_{11}$ component in the above characteristic matrix formula may differ when the calculation was made from the first layer to the $N^{th}$ layer and when the calculation was made from the $N^{th}$ layer to the first layer, but one having a higher value of the real part shall be used. If $m_{11}$ calculated from the first layer to the $N^{th}$ layer and $m_{11}$ calculated from the $N^{th}$ layer to the first layer are the same, the value of the $m_{11}$ component calculated from the first layer to the $N^{th}$ layer was used.

Using the calculated values of the components of the aforementioned characteristic matrix of TE wave at various angles of incidence, the transmission coefficient t and the reflection coefficient r in the TE wave can be calculated, and the transmittance and the reflectance of TE wave can be calculated from these, as follows.

[Math 10]

$$t = \frac{2p_0}{(m_{11} + m_{12}p_{n+1})p_0 + (m_{21} + m_{22}p_{n+1})}$$

$$r = \frac{(m_{11} + m_{12}p_{n+1})p_0 - (m_{21} + m_{22}p_{n+1})}{(m_{11} + m_{12}p_{n+1})p_0 + (m_{21} + m_{22}p_{n+1})}$$

$$p_0 = \sqrt{\frac{\varepsilon_{r0}}{\mu_{r0}}}\cos\theta_0 \qquad p_{n+1} = \sqrt{\frac{\varepsilon_{rn+1}}{\mu_{rn+1}}}\cos\theta_{n+1}$$

(where $\mu_{r0}$ is the complex relative permittivity of the air layer on the incidence side, $\varepsilon_{r0}$ is the complex relative magnetic permeability of the air layer on the incidence side, $\theta_0$ is the incident angle [rad], $\mu_{rn+1}$ is the complex relative permittivity of the air layer on the transmission side, $\varepsilon_{rn+1}$ is the complex relative magnetic permeability of the air layer on the transmission side, and $\theta_{n+1}$ is the angle of emission [rad])

For the characteristic matrix, the transmission coefficient, and the reflection coefficient of the TM wave, the characteristic matrix, the transmission coefficient t, and the reflection coefficient r can be calculated, and the transmittance and the reflectance of the TM wave can be calculated from these, using the following formulas.

[Math 11]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\varepsilon_{ri}}{\mu_{ri}}}\sin\left(\frac{\omega}{c} n_i d_i \cos\theta_i\right) \\ -j\sqrt{\frac{\mu_{ri}}{\varepsilon_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

$$t = \frac{2p_0}{(m_{11} + m_{12}p_{n+1})p_0 + (m_{21} + m_{22}p_{n+1})}$$

$$r = \frac{(m_{11} + m_{12}p_{n+1})p_0 - (m_{21} + m_{22}p_{n+1})}{(m_{11} + m_{12}p_{n+1})p_0 + (m_{21} + m_{22}p_{n+1})}$$

$$p_0 = \sqrt{\frac{\mu_{r0}}{\varepsilon_{r0}}}\cos\theta_0 \qquad p_{n+1} = \sqrt{\frac{\mu_{rn+1}}{\varepsilon_{rn+1}}}\cos\theta_{n+1}$$

($\mu_{r0}$ is the complex relative permittivity of the air layer on the incidence side, $\varepsilon_{r0}$ is the complex relative magnetic permeability of the air layer on the incidence side, $\theta_0$ is the angle of incidence [rad], $\mu_{rn+1}$ is the complex relative permittivity of the air layer on the transmission side, $\varepsilon_{rn+1}$ is the complex relative magnetic permeability of the air layer on the transmission side, $\theta_{n+1}$ is the angle of emission [rad], $\omega$ is the angular frequency [rad/s], c is the speed of light [m/s], $n_i$ is the complex refractive index of the $i^{th}$ layer, $d_i$ is the thickness of the $i^{th}$ layer [m], $\theta_i$ is the refractive angle of an electromagnetic wave incident on the $i^{th}$ layer [rad], j is the imaginary unit, $\varepsilon_{ri}$ is the complex relative permittivity of the $i^{th}$ layer, $\mu_{ri}$ is the complex relative magnetic permeability of the $i^{th}$ layer, and $n_0$ is the refractive index of the air).

In the cover of the present embodiment, the density of the at least one layer is preferably less than 0.90 g/cm$^3$, more preferably less than 0.75 g/cm$^3$, and even more preferably less than 0.50 g/cm$^3$. When the density of at least one layer is in the above range, the magnitude $N_i$ of the complex refractive index $n_i$ becomes smaller, which reduces the interfacial reflection and the incident angle dependence of the radio wave transmittance. In addition, the density of the at least one layer is preferably 0.03 g/cm$^3$ or more, more preferably 0.05 g/cm$^3$ or more, and even more preferably 0.10 g/cm$^3$ or more, from the viewpoint of the mechanical strength.

Note that the density of each layer can be determined specifically by the method described in the Examples section to be described later.

From the viewpoint of adjusting the complex refractive the index, the density, the relative permittivity, the dielectric dissipation factor, and the like of each layer and reducing the incident angle dependence of radio wave transmittance, it is preferable that the cover of the present embodiment includes at least one layer of foam rather than a single layer of a resin plate with high density and relative permittivity, such as a single layer made of a single layer of foam. For example, it is preferable that the cover has a monolayer composed of a single layer of foam, a laminate composed of multiple layers with different densities, a laminate composed of a resin layer and a foam layer, or a laminate with a sandwich structure of a resin layer/foam layer/resin layer.

A laminate composed of multiple layers with different densities is, for example, a laminate including at least one layer having a density of less than 0.90 cm$^3$/g and at least one layer having a density of 0.90 cm$^3$/g or more.

When the cover is composed of multiple layers with different densities, from the viewpoint of increasing mechanical strength, it is preferable that the surface layer that defines the outer surface when disposed on an electronic

device that transmits and receives radio waves is the layer with the highest density. For example, in the case of a laminate including at least one layer having a density of less than 0.90 $cm^3/g$ and at least one layer having a density of 0.90 $cm^3/g$ or more as described above, it is preferable that at least one of the layers with a density of 0.90 $cm^3/g$ or more is a surface layer that defines the outer surface, and it is more preferable that the layer with the highest density among the layers with a density of 0.90 $cm^3/g$ or more is the surface layer that defines the outer surface.

(Flame retardancy of each layer of cover)

Each layer of the cover of the present embodiment, especially when it is foam, is generally flammable because it contains air, and flame resistance is especially important when used as a cover. Therefore, each layer of the cover a flame retardant level of preferably V-2 or higher, more preferably V-1 or higher, and even more preferably V-0 when a thickness is 5.0 mm for the foam layer and 1.0 mm for the resin layer.

The flame retardance of each layer can be altered by adjusting the type of resin used in production and also the type and content of flame retardance used with the resin etc. By using a cover having high flame retardance, it is possible to inhibit the spread of combustion even supposing that combustion occurs as a result of a short, explosion, or the like in an electronic device that transmits and receives radio waves.

Note that the flame retardance of the heat insulating layer according to standard UL-94 can specifically be measured by a method described in the EXAMPLES section to be described later.

(Relative permittivity and dielectric dissipation factor tan $\delta$ of each cover layer)

The relative permittivity of each layer of the cover of the present embodiment is preferably 1.00 to 3.00, more preferably 1.00 to 2.50, and even more preferably 1.00 to 2.00 at a specific frequency of a radio wave, in the foam of the present embodiment.

Moreover, the dielectric dissipation factor tan $\delta$ of each layer of the cover of the present embodiment at a specific frequency of a radio wave is preferably 0.05 or less, more preferably 0.01 or less, and even more preferably 0.005 or less.

Moreover, the method by which the relative permittivity and the dielectric dissipation factor tan $\delta$ of the base resin used in each layer of the cover are reduced may be by selecting a resin having a low non-foamed resin density, a resin having a low non-foamed resin polarity, a resin having few polar groups at terminals of molecular chains, or the like as the base resin. Examples of resins that are particularly suitable from this viewpoint include a polyolefin-based resin, a polystyrene-based resin, a polyphenylene ether-based resin, a polyimide-based resin, a fluororesin, a polymer liquid-crystal resin, and a polyphenylene sulfide-based resin. Of these resins, a polyolefin-based resin, a polystyrene-based resin, and a polyphenylene ether-based resin are preferable when taking into account viewpoints of processability, cost, and flame retardance.

Note that the relative permittivity and the dielectric dissipation factor tan $\delta$ can specifically be measured by a method described in the EXAMPLES section to be described later.

(Cell diameter of foam layer)

When the cover of the present embodiment has a foam layer, in 10 %volume of each foam layer, in a case in which the foam is not a foam formed of foam particles, a ratio (B/A) of an average value B of diameters of cells included in a range of 20% to 80% in a thickness direction from a surface of the foam relative to an average value A of diameters of cells in contact with the surface of the foam is preferably 0.3 or more and less than 3.0.

In a case in which the foam is a foam formed of foam particles, in 10 %volume of each foam layer, for foam particles that are included in a range of 10% to 90% in a thickness direction from a surface of the foam, a ratio (B'/A') of an average value B' of diameters of cells included in a range of 20% to 80% in a radial direction from surfaces of the foam particles relative to an average value A' of diameters of cells in contact with the surfaces of the foam particles is preferably 0.3 or more and less than 3.0.

The volume ratio of the portion satisfying the above cell diameter relationship is preferably 10 volume% or more of each foam layer, more preferably 20 volume% or more of each foam layer, and even more preferably 25 volume% or more of each foam layer. When the volume ratio is in the above range, the portion of the cover that satisfies the above cell diameter relationship can constitute a sufficient portion through which radio waves are transmitted when the cover is disposed on an electronic device that transmits and receives radio waves.

((Surface layer cell diameter and central section cell diameter of cells in foam))

In the present specification, the phrase "cells in contact with the surface of the foam" (surface layer cells) refers

to cells that, among cells included entirely in the foam, are cells having an outline that partially coincides with a line indicating the surface of the foam in a situation in which a cross-section obtained through sectioning of the foam in a thickness direction is observed.

Moreover, in the present specification, the phrase "cells included in a range of 20% to 80% in a thickness direction from the surface of the foam" (central section cells) refers to cells that, among cells included entirely in the foam, are cells that are at least partially included in a range of 20% to 80% of thickness from the surface of the foam when the thickness of the foam is taken to be 100% and that are not in contact with the surface of the foam (i.e., are not surface layer cells) in a situation in which a cross-section obtained through sectioning of the foam in the thickness direction is observed.

Note that measurement of cell diameter is performed by observing a cross-section obtained by sectioning the foam in the thickness direction using a scanning electron microscope (SEM) and then measuring, as the diameter of a cell, a line segment having a largest length among the lengths of line segments joining two points on the outline of that cell.

An average value A for surface layer cell diameter is taken to be a value obtained by measuring the diameters of at least 15 surface layer cells and then averaging the measured values. Moreover, an average value B for central section cell diameter is taken to be a value obtained by measuring the diameters of at least 30 central section cells and then averaging the measured values.

Note that the surface layer cell diameter and the central section cell diameter can specifically be measured by a method described in the EXAMPLES section to be described later.

In a case in which the foam according to the present embodiment is a foam (for example, an extrusion foam, an injection foam, a stretching foam, a solvent extraction foam, or the like) that is not a foam formed of foam particles (i.e., a bead foam), a ratio (B/A) of the average value B for central section cell diameter relative to the average value A for surface layer cell diameter is preferably 0.3 or more and 3.0 or less, more preferably 0.5 or more and less than 2.0, and even more preferably 0.6 to 1.8. A foam for which B/A is within any of the ranges set forth above has excellent uniformity of relative permittivity and can reduce refraction and scattering of radio waves as a result of having uniform foaming properties.

((Outermost layer cell diameter and center cell diameter of cells in foam particles))

In the present specification, the phrase "cells in contact with surfaces of foam particles" (outermost layer cells) refers to cells that, for foam particles having the entirety thereof, surrounded by a line indicating the surface of the foam particle (foam particle outline), included in a range of 10% to 90% in a thickness direction from the surface of a foam formed of foam particles, are cells that, among cells included entirely in the foam particle, have an outline partially coinciding with the line indicating the surface of the foam particle (foam particle outline) in a situation in which a cross-section obtained by sectioning the foam in a thickness direction is observed.

Moreover, in the present specification, the phrase "cells included in a range of 20% to 80% in a radial direction from surfaces of foam particles" (center cells) refers to cells that, for foam particles having the entirety thereof, surrounded by a line indicating the surface of the foam particle (foam particle outline), included in a range of 10% to 90% in a thickness direction from the surface of a foam formed of foam particles, are cells that, among cells included entirely in the foam particle, are at least partially included in a range of 20% to 80% of diameter from the surface of the foam particle when the diameter of the foam particle is taken to be 100% and that are not in contact with the surface of the foam particle (i.e., are not outermost layer cells) in a situation in which a cross-section obtained by sectioning the foam in a thickness direction is observed.

Note that a foam formed of foam particles is considered to be a foam in which foam particles (particles originating from pre-expanded particles) constitute 50 mass% or more of the foam.

The foam formed of foam particles may be solid with the exception of cells present in the foam particles and may not have spaces (cells) between the foam particles.

In measurement of cell diameter, only cells for which the entirety thereof is clearly observable from a cross-sectional image when a cross-section obtained by sectioning the foam in the thickness direction is observed using a scanning electron microscope (SEM) are used as measurement subjects, and a line segment having a largest length among the lengths of line segments joining two points on the outline of a cell is measured as the diameter of that cell.

An average value A' for outermost layer cell diameter is taken to be a value obtained by measuring the diameters of at least 15 surface layer cells and then averaging the measured values. Moreover, an average value B' for center cell diameter is taken to be a value obtained by measuring the diameters of at least 30 central section cells and then averaging the measured values.

Note that the outermost layer cell diameter and the center cell diameter can specifically be measured by a method described in the EXAMPLES section to be described later.

Moreover, in a case in which the foam according to the present embodiment is a foam formed of foam particles, a ratio (B'/A') of the average value B' for center cell diameter relative to the average value A' for the outer most layer

cell diameter is preferably 0.3 or more and 3.0 or less, more preferably 0.5 or more and less than 2.0, and even more preferably 0.6 to 1.8. A foam for which B'/A' is within any of the ranges set forth above has excellent uniformity of relative permittivity in an inner section of the foam and can reduce refraction and scattering of radio waves as a result of having uniform foaming properties.

Moreover, in a case in which the foam according to the present embodiment is a foam formed of foam particles, a ratio (B'/A) of the average value B' for center cell diameter relative to the average value A for surface layer cell diameter is preferably 0.3 or more and 3.0 or less, more preferably 0.5 or more and less than 2.0, and even more preferably 0.6 to 1.8. A foam for which B'/A is within any of the ranges set forth above has excellent uniformity of relative permittivity in proximity to the surface of the foam and can reduce refraction and scattering of radio waves as a result of having uniform foaming properties.

((Maximum cell diameter of cells in foam))

When the cover of the present embodiment has a foam layer, in 10 volume% or more of each foam layer, the maximum cell diameter of cells in the foam according to the present embodiment is preferably 1.500 mm or less, more preferably 1.300 mm or less, even more preferably 1.000 mm or less, further preferably 0.800 mm or less, and particularly preferably 0.500 mm or less. In a high-frequency band, scattering of radio waves occurs when structures of a similar size to the wavelength are present. However, when the maximum cell diameter is 1.500 mm or less, scattering of radio waves in a high-frequency band can be reduced because cells included in the foam have a small diameter. In particular, scattering of radio waves becomes less likely to occur with decreasing maximum cell diameter relative to the wavelength of the radio waves.

From this viewpoint, "maximum cell diameter/wavelength" for the foam at a specific frequency of a radio wave is preferably less than 0.15, more preferably 0.12 or less, and even more preferably 0.10 or less.

In the present specification, in the case of a foam other than a bead foam, the "maximum cell diameter" of cells in the foam is taken to be the largest value among all of the previously described measurement values for surface layer cell diameter and central section cell diameter in the foam. In the case of a bead foam, the "maximum cell diameter" is taken to be the largest value among all of the previously described measurement values for surface layer cell diameter in the foam and outermost layer cell diameter and center cell diameter in foam particles.

The maximum cell diameter can specifically be measured by a method described in the EXAMPLES section to be described later.

In the case of a bead foam, for example, the method by which the maximum cell diameter in the foam is controlled to within any of the ranges set forth above may be by shortening the time from when the release of impregnation pressure of gas to the base resin is completed up until when heating (foaming) starts as described above. This can reduce uneven impregnation of gas in the foam particles at the point at which heating starts during foaming and can provide a more uniform cell diameter in the foam while also preventing the cell diameter from increasing. In addition, examples of typical methods for reducing the maximum cell diameter in a foam include increasing the concentration of a blowing agent in the base resin during a foaming step, increasing the pressure and/or lowering the temperature of a gas that is impregnated into the base resin in an impregnation step in a case in which a blowing agent that is a gas is used, adjusting the foaming temperature in a foaming step, adjusting the surface tension of the base resin, adjusting the glass-transition temperature of the base resin, and so forth.

The volume ratio of the portion with the above maximum cell diameter of 1.500 mm or less is preferably 10 volume% or more of each foam layer, more preferably 20 volume% or more of each foam layer, and even more preferably 25 volume% or more of each foam layer. When the volume ratio is in the above range, the area where the above maximum cell diameter is 1.500 mm or less can sufficiently constitute the area through which radio waves are transmitted when the cover is disposed on an electronic device that transmits and receives radio waves.

[Electronic device that transmits and receives radio waves]

An electronic device that transmits and receives radio waves of the present embodiment is characterized by including the cover of the present embodiment described above. In the electronic device that transmits and receives radio waves, the cover of the present embodiment is used as a component that constitutes a housing that accommodates and protects components (antenna, control board, etc.) inside the device.

Because the cover of the present embodiment is used, an electronic device that has high communication quality and a wide communication range is achieved.

## EXAMPLES

The following provides a more detailed description of the present disclosure through examples. However, the

present disclosure is not in any way limited by the following examples.

Evaluation methods used in the examples and comparative examples are described below.

(1) Density of each layer

With reference to the method of making each layer of the cover obtained in examples and comparative examples, a sample of 30 mm-square and 10 mm in thickness was made, the mass W [g] of the sample was measured, and the density (g/cm$^3$) was determined by dividing the mass W by the volume V [cm$^3$] of the sample.

Note that in a case in which the cutting described above is difficult, the same material as in each example or comparative example may be prepared, the sample mass may be measured, the volume may be measured by submersion, and then these values may be used to calculate the density.

(2) Relative permittivity and dielectric dissipation factor tan δ of each layer

A sample was prepared by cutting out a sample of 450 mm × 450 mm × 10 mm (thickness) from each layer of the cover obtained in the examples and comparative examples.

Next, the sample was set up in a dielectric lens-equipped transmission attenuation measurement jig of a frequency change method relative permittivity/dielectric dissipation factor measurement device DPS 10-02 produced by KEYCOM Corp., and the amount of transmission attenuation and the amount of phase change were measured under room temperature (temperature: 26 °C; humidity: 60%) conditions. Based on the obtained results and the thickness of the sample, fitting was performed for calculated values and actual measurement values of the amount of transmission attenuation and the amount of phase change, the relative permittivity and the dielectric dissipation factor for when fitting was best were determined, and these were taken to be measured values for the relative permittivity and the dielectric dissipation factor.

(3) Complex refractive index $n_i$ of each layer and magnitude $N_i$ thereof

For the covers obtained in the examples and comparative examples, the complex refractive index $n_i$ of each layer was calculated from the relative permittivity and the dielectric dissipation factor obtained in "(2) Relative permittivity and dielectric dissipation factor tan δ of each layer" above according to the following formula. In addition, from the obtained complex refractive index $n_i$, the magnitude $N_i$ thereof was calculated.

[Math 12]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where $n_i$ is the complex refractive index of the i$^{th}$ layer, j is the imaginary unit, $\varepsilon_{ri}$ is the complex relative permittivity of the i$^{th}$ layer, $\mu_{ri}$ is the complex relative magnetic permeability of the i$^{th}$ layer, tan δ is the dielectric dissipation factor, $\varepsilon_i'$ is the relative permittivity, and $\varepsilon_i''$ is the relative dielectric loss factor)

(4) Flame retardance of each layer

Each layer of the cover obtained in each of the examples and comparative examples was subjected to a test in accordance with the UL-94 vertical method (20 mm vertical flame test) of UL standards (United States of America) so as to evaluate flame retardance.
The measurement method is described in detail below.
Five test specimens of 125 mm in length, 13 mm in width, and 5.0 mm in thickness for the foam layer and 1.0 mm in thickness for the resin layer that had been cut out from the foam layer were prepared and used. Each test specimen was vertically attached to a clamp, a 20 mm flame was twice applied to the test specimen for 10 seconds, and a judgment of V-0, V-1, or V-2 was made based on the burning behavior.

V-0: Flame burning time of both first and second applications was 10 seconds or less, total flame burning time and flameless burning time for second application was 30 seconds or less, total flame burning time for 5 test specimens was 50 seconds or less, no samples burn up to position of fixing clamp, and no catching fire of cotton due to burning drippings
V-1: Flame burning time of both first and second applications was 30 seconds or less, total flame burning time and flameless burning time for second application was 60 seconds or less, total flame burning time for 5 test specimens was 250 seconds or less, no samples burn up to position of fixing clamp, and no catching fire of cotton due to burning drippings
V-2: Flame burning time of both first and second applications is 30 seconds or less, total flame burning time and flameless burning time for second application is 60 seconds or less, total flame burning time for 5 test specimens is 250 seconds or less, and no samples burn up to position of fixing clamp, but ignition of cotton occurs due to burning drippings

Note that a judgment of "non-conforming (×)" was made in cases that did not correspond to any of V-0, V-1, and V-2.

(5) Expansion ratio of foam layer

With reference to the method of making each layer of the cover obtained in examples and comparative examples, a foam of roughly 30 mm-square and 10 mm in thickness was produced. The mass W [g] of this sample was measured, and a value (V/W) obtained by dividing the sample volume V [$cm^3$] by the mass W was taken to be the expansion ratio ($cm^3/g$).
Note that in a case in which the cutting described above is difficult, the same material as in each example or comparative example may be prepared, the sample mass may be measured, the volume may be measured by submersion, and then these values may be used to calculate the expansion ratio.

(6) Maximum cell diameter, average value A for surface layer cell diameter, and average value B for central section cell diameter in foam, and average value A' for outermost layer cell diameter and average value B' for center cell diameter in foam particles

A foam obtained in each of the examples and comparative examples was sectioned in a thickness direction and then a cross-section thereof was observed with a magnification in a range of ×30 to ×400 using a 3D Real Surface View Microscope VE-9800 produced by Keyence Corporation in order to determine the maximum cell diameter, the average value A for surface layer cell diameter, and the average value B for central section cell diameter in the foam and the average value A' for outermost layer cell diameter and the average value B' for center cell diameter in foam particles of a bead foam, which are described below. The obtained values were used to calculate B/A in the case of a foam that was not a bead foam and to calculate B'/A' and B'/A in the case of a bead foam.
Note that in measurement of cell diameter, only cells for which the entirety thereof could be clearly observed in a cross-sectional image were used as measurement subjects, and a line segment having a largest length among the lengths of line segments joining two points on an outline of a cell was measured as the diameter of that cell. Also note that in a case in which at least the number of cells stipulated below were not present in a single cross-sectional image, cross-sectional images were added and measurements were performed until at least the stipulated number of cells was reached.

(6-1) Maximum cell diameter in foam

In the case of a foam that was not a bead foam, the maximum cell diameter (μm) in the foam was taken to be

the largest value among all measured values for surface layer cell diameter and central section cell diameter in the foam, which are described below. Moreover, in the case of a bead foam, the maximum cell diameter (mm) in the foam was taken to be the largest value among all measured values for surface layer cell diameter in the foam and outermost layer cell diameter and center cell diameter in foam particles, which are described below.

(6-2) Average value A for surface layer cell diameter in foam

The "surface layer cell diameter" in a foam refers to cells that, among cells included entirely in the foam, are cells having an outline that partially coincides with a line indicating the surface of the foam in a situation in which a cross-section obtained through sectioning of the foam in a thickness direction is observed in a cross-sectional image. At least 15 surface layer cell diameters in the foam were measured, and the measured values were averaged to obtain an average value A (μm).

(6-3) Average value B for central section cell diameter in foam

The "central section cell diameter" in a foam refers to cells that, among cells included entirely in the foam, are cells that are at least partially included in a range of 20% to 80% of thickness from the surface of the foam when the thickness of the foam is taken to be 100% and that are not in contact with the surface of the foam (i.e., are not surface layer cells) in a situation in which a cross-section obtained through sectioning of the foam in the thickness direction is observed in a cross-sectional image. At least 30 central section cell diameters in the foam were measured, and the measured values were averaged to obtain an average value B (μm).

(6-4) Average value A' for outermost layer cell diameter in foam particles

The "outermost layer cell diameter" in foam particles of a foam formed of foam particles refers to cells that, for foam particles having the entirety thereof, surrounded by a line indicating the surface of the foam particle (foam particle outline), included in a range of 10% to 90% in a thickness direction from the surface of the foam, are cells having an outline partially coinciding with the line indicating the surface of the foam particle (foam particle outline) in a situation in which a cross-section obtained by sectioning the foam in a thickness direction is observed in a cross-sectional image. At least 15 outermost layer cell diameters in foam particles of a foam formed of foam particles were measured, and the measured values were averaged to obtain an average value A' (μm).

(6-5) Average value B' for center cell diameter in foam particles

The "center cell diameter" in foam particles of a foam formed of foam particles refers to cells that, for foam particles having the entirety thereof, surrounded by a line indicating the surface of the foam particle (foam particle outline), included in a range of 10% to 90% in a thickness direction from the surface of the foam, are cells that are at least partially included in a range of 20% to 80% of diameter from the surface of the foam particle when the diameter of the foam particle is taken to be 100% and that are not in contact with the surface of the foam particle (i.e., are not outermost layer cells) in a situation in which a cross-section obtained by sectioning the foam in the thickness direction is observed in a cross-sectional image. At least 30 center cell diameters in foam particles of a foam formed of foam particles were measured, and the measured values were averaged to obtain an average value B' (μm).

(7) Radio wave transmittance of cover

The frontal transmittance X (at an angle of incidence of 0 °) and the oblique transmittance Y of TE wave at an angle of incidence of 60 ° at 28 GHz were measured for the covers obtained in the examples and comparative examples according to the following method.

First, a sample was prepared from the cover in sizes of 200 mm × 200 mm × thickness thereof. Next, the sample was set up in a dielectric lens-equipped transmission attenuation measurement jig of a frequency change method relative permittivity/dielectric dissipation factor measurement device DPS10-02 produced by KEYCOM Corp., and the amount of transmission attenuation was measured under room temperature (temperature: 26 °C; humidity: 60%) conditions. The frontal radio wave transmittance X (%) was determined by conversion from the measurement result of the transmission attenuation (dB). In addition, the oblique transmittance Y (%) of TE wave was measured in the same manner by rotating and setting the samples so that the angle of incidence was 60 °. The oblique transmittance (%) of the TM wave at an angle of incidence of 60 ° was also measured by adjusting the polarization direction at the time of measurement, referring to the above method.

Note that the measurements for Examples 1 to 28 and Comparative Examples 1 to 4 were made at a frequency

of 28 GHz as described above, while the measurements for Examples 31 to 44 and Comparative Examples 11 to 14 were made at the frequencies listed in Table 2, respectively. If the frequency was not 28 GHz, the sample size was measured by adjusting the sample size, with reference to the method above.

In Examples 3, 10, 11, 13, 21, 27, 28, and Comparative Example 1, the oblique transmittance of TE wave at angles of incidence at 30 ° and 45 ° and the oblique transmittance of the TM wave at angles of incidence a 30 °, 45 °, and 60 ° were also measured in the same manner as described above by rotating and setting the samples so that the incident angle was the specified value .

For some of cases, the reflection coefficient and the transmission coefficient were calculated from each component of the aforementioned characteristic matrix after confirming that there was no discrepancy between the measured values and the calculated values, and the transmittance was calculated.

(8) Radio wave transmittance of cover

For the covers obtained in the examples and comparative examples, the frontal reflectance (at an angle of incidence of 0 °) and the oblique reflectance of TE wave at an angle of incidence of 60 ° were calculated by measuring the reflection attenuation with reference to the measurement method described above in "(7) Radio transmittance of cover".

For Examples 1 to 28 and Comparative Examples 1 to 4, the measurements were made at a frequency of 28 GHz, and for Examples 31 to 44 and Comparative Examples 11 to 14, the measurements were made at the frequencies listed in Table 2, respectively.

For some of cases, the reflection coefficient and the transmission coefficient were calculated from each component of the aforementioned characteristic matrix after confirming that there was no deviation between the measured values and the calculated values, and the reflectance was calculated.

(9) Load at 1-mm deflection of cover

The load (N) at a 1-mm deflection was measured for the covers obtained in Examples 6, 10, 11, 13, 21, and 27, and Comparative Example 1 as follows.

First, samples of 10 mm wide × 100 mm long × thickness thereof were cut from the covers obtained in the above examples and comparative examples. Then, a three-point bending test was performed on the samples using an autograph (AG-X plus series AG-50kNPlus, manufactured by Shimadzu Corporation) with a span of 64 mm at a loading speed of 10 mm/min. The load when the sample deflected 1 mm from the initial state thereof was measured and was used as the load at a 1-mm deflection of the cover.

(10) Absolute value of difference ($| M_{12} - M_{21} |$) between magnitude $M_{12}$ of $m_{12}$ component and magnitude $M_{21}$ of the $M_{21}$ component in frontal direction (at angle of incidence of 0 °) in characteristic matrix formula

The absolute value of the difference between the magnitude $M_{12}$ of the $m_{12}$ component and the magnitude $M_{21}$ of the $M_{21}$ component in the frontal direction (at an angle of incidence of 0 °) ($| M_{12} - M_{21} |$) in the following characteristic matrix formula was obtained for the covers obtained in the examples and comparative examples based on each measurement value.

In covers made of laminates of N layers with N = 2 or more, the values of the $m_{12}$ component and the $M_{21}$ component were used when the calculation was made from the first layer to the $N^{th}$ layer.

[Math 13]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where $\omega$ is an angular frequency [rad/s], c is the speed of light [m/s], n; is the complex refractive index of the i$^{th}$ layer, $d_i$ is the thickness of the i$^{th}$ layer [m], $\theta_i$ is the refractive angle of an electromagnetic wave incident on the i$^{th}$ layer [rad], j is the imaginary unit, $\varepsilon_{ri}$ is the complex relative permittivity of the i$^{th}$ layer, $\mu_{ri}$ is the complex relative magnetic permeability of the i$^{th}$ layer, $n_0$ is the refractive index of the air, and $\theta_0$ is the angle of incidence [rad])

Since no magnetic material was used in the present examples, the specific permeability of each of the above layers was considered to be 1.0. As the complex refractive index of each layer, the value obtained in "(3) Complex refractive index $n_i$ of each layer and magnitude $N_i$ thereof" above was used.

(11) Magnitude $M_{11}$ of $m_{11}$ component of TE wave at angle of incidence of 60 ° in characteristic matrix formula

The magnitude (absolute value) M11 of the $m_{11}$ component of TE wave at an angle of incidence of 60 ° was determined for the covers obtained in the examples and comparative examples based on the measured values in the following characteristic matrix formula.

In covers made of laminates of N layers with N = 2 or more, the $m_{11}$ component of the following characteristic matrix formula may differ when the calculation was made from the first layer to the N$^{th}$ layer or from the N$^{th}$ layer to the first layer, but the higher value of the real number part was used. If $m_{11}$ calculated from the first layer to the N$^{th}$ layer and $m_{11}$ calculated from the N$^{th}$ layer to the first layer were the same, the value of the $m_{11}$ component calculated from the first layer to the N$^{th}$ layer was used.

[Math 14]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where $\omega$ is an angular frequency [rad/s], c is the speed of light [m/s], $n_i$ is the complex refractive index of the i$^{th}$ layer,

$d_i$ is the thickness of the $i^{th}$ layer [m], $\theta_i$ is the refractive angle of an electromagnetic wave incident on the $i^{th}$ layer [rad], j is the imaginary unit, $\varepsilon_{ri}$ is the complex relative permittivity of the $i^{th}$ layer, $\mu_{ri}$ is the complex relative magnetic permeability of the $i^{th}$ layer, $n_0$ is the refractive index of the air, and $\theta_0$ is the angle of incidence [rad]).

Since no magnetic material is used in the present examples, the specific permeability of each of the above layers was set to 1.0. As the complex refractive index of each layer, the value obtained in "(3) Complex refractive index $n_i$ of each layer and magnitude $N_i$ thereof" above was used.

The materials used in the examples and comparative examples are as follows.

[Foam]

(1) Foam 2.5 (expansion ratio 2.5 ($cm^3/g$))

After adding together 60 mass% of S201A (produced by Asahi Kasei Corporation) as a polyphenylene ether-based resin (PPE), 15 mass% of bisphenol A bis(diphenyl phosphate) (BBP) as a non-halogenated flame retardant, 10 mass% of high impact polystyrene resin (HIPS) having a rubber concentration of 6 mass%, and 15 mass% of GP685 (produced by PS Japan Corporation) as a general purpose polystyrene resin (PS), these materials were subjected to hot melt-kneading in an extruder and were subsequently extruded so as to produce base resin pellets.

In accordance with a method described in Example 1 of JP H4-372630A, the base resin pellets were loaded into a pressure-resistant vessel, gas inside the vessel was purged with dry air, carbon dioxide (gas) was subsequently injected as a blowing agent, the base resin pellets were impregnated with carbon dioxide for 3 hours under conditions of a pressure of 3.0 MPa and a temperature of 10 °C, and then the base resin pellets were removed from the pressure-resistant vessel and were immediately transferred to a foaming furnace where they were subjected to foaming through steam pressurized to a maximum of 190 kPa·G while rotating an impeller at 77 rpm so as to obtain foam particles.

In the foaming step of the expandable particles, the time interval removal from the pressure vessel to the start of heating by pressurized steam was 10 seconds. The hydrocarbon gas content in the foam particles straight after foaming was measured by gas chromatography but was below the limit of detection (0.01 mass%).

Thereafter, the foam particles were loaded into a vessel and were subjected to pressurization treatment by introducing pressurized air into the vessel (pressure increased to 0.4 MPa over 4 hours and then held at 0.4 MPa for 16 hours). The resultant foam particles were loaded into a mold for in-mold shaping including steam holes and were heated by steam so as to cause expansion and fusion of the foam particles to one another. Thereafter, cooling was performed, and the resultant product was removed from the shaping mold to obtain Foam 2.5 (expansion ratio 2.5 ($cm^3/g$)) formed of foam particles.

(2) Foam 3 (expansion ratio 3 ($cm^3/g$))

Foam 3 (expansion ratio 3 times) made of foamed particles was obtained in the same manner as Foam 2.5, except that the pressure of pressurized steam was set to 200 kPa·G in the heating step after impregnation with carbon dioxide.

(3) Foam 3.5 (expansion ratio 3.5 ($cm^3/g$))

Foam 3.5 (expansion ratio 3.5 ($cm^3/g$)) made of foamed particles was obtained in the same manner as Foam 2.5, except that the pressure of pressurized steam was set to 210 kPa·G in the heating step after impregnation with carbon dioxide.

(4) Foam 5 (expansion ratio 5 ($cm^3/g$))

Foam 5 (expansion ratio 5 ($cm^3/g$)) made of foamed particles was obtained in the same manner as Foam 2.5, except that the pressure of pressurized steam was set to 260 kPa·G in the heating step after impregnation with carbon dioxide.

(5) Foam 1.5 (expansion ratio 1.5 ($cm^3/g$))

Foam 1.5 (expansion ratio 1.5 ($cm^3/g$)) made of foamed particles was obtained in the same manner as Foam 2.5, except that the pressure of pressurized steam was set to 160 kPa·G in the heating step after impregnation with carbon dioxide.

(6) Foam 10 (expansion ratio 10 ($cm^3/g$))

Foam 10 (expansion ratio 10 ($cm^3/g$)) made of foamed particles was obtained in the same manner as Foam 2.5, except that the pressure of pressurized steam was set to 330 kPa·G in the heating step after impregnation with carbon dioxide.

(7) Foam 5.8 (expansion ratio 5.8 ($cm^3/g$))

Foam 5.8 (expansion ratio 5.8 ($cm^3/g$)) made of foamed particles was obtained in the same manner as Foam 2.5, except that the pressure of pressurized steam was set to 270 kPa·G in the heating step after impregnation with carbon dioxide.

(8) Foam 7.0 (expansion ratio 7.0 ($cm^3/g$))

Foam 7.0 (expansion ratio 7.0 ($cm^3/g$)) made of foamed particles was obtained in the same manner as Foam 2.5, except that the pressure of pressurized steam was set to 280 kPa·G in the heating step after impregnation with carbon dioxide.

(9) Foam 2 (expansion ratio 2 ($cm^3/g$))

Foam 7 (expansion ratio 2 ($cm^3/g$)) made of foamed particles was obtained in the same manner as Foam 2.5, except that the pressure of pressurized steam was set to 180 kPa·G in the heating step after impregnation with carbon dioxide.

(10) Foam 2.3 (expansion ratio 2.3 ($cm^3/g$))

Foam 2.3 (expansion ratio 2.3 ($cm^3/g$)) made of foamed particles was obtained in the same manner as Foam 2.5, except that the pressure of pressurized steam was set to 185 kPa·G in the heating step after impregnation with carbon dioxide.

(11) Foam EE15

Foam EE15 (expansion ratio 15 ($cm^3/g$)) were obtained by adjusting the foaming temperature with reference to the content described in Example 3 of JP H 04-372630 A to adjust the internal pressure of the expandable particles in the manufacturing process of the secondary expandable particles so that the finally obtained foam had a magnification of 15.0 ($cm^3/g$), and by performing shaping using the obtained secondary expanded particles, with reference to the production method of Form 2.5. The hydrocarbon gas content in the obtained foam particles (secondary foam particles) straight after foaming was measured but was below the limit of detection (0.01 mass%).

(12) Foam XE15

A foam was produced by the following procedure with reference to JP 2006-077218 A.

First, low-density polyethylene (PE) (density: 922 $kg/m^3$; MI = 7.0 g/10 min) was supplied to a supply region of a screw-type extruder having a barrel internal diameter of 150 mm at a rate of 900 kg/hr together with 1.2 parts by mass of talc powder (particle diameter: 8.0 mm) as a cell nucleating agent and 0.8 parts by mass of a gas permeation modifier (stearic acid monoglyceride) relative to 100 parts by mass of the resin. The barrel temperature of the extruder was adjusted to 190 °C to 210 °C, 3 parts by mass of a foaming agent composed of 100 mass% of n-butane was injected from a foaming agent injection port installed at a tip of the extruder relative to 100 parts by mass of the resin, and this foaming agent was mixed with the molten resin composition to obtain a foamable molten mixture.

The foamable molten mixture was cooled to 108 °C by a cooling device installed at an outlet of the extruder, was subsequently continuously extruded and foamed in an atmosphere of normal temperature and atmospheric pressure through an orifice plate having an opening shape with an average thickness of approximately 4.0 mm and a width of approximately 226 mm, and was shaped while adjusting the take up rate of resin foam so as to obtain a plate-shaped foam having a thickness of 52 mm, a width of 560 mm, a length of 1,000 mm, and a density of 100 $kg/m^3$. The hydrocarbon gas content in this resin foam was 2.4 mass%. The resin foam was stored in a 40 °C environment for 3 months and was used as Foam XE10 (expansion ratio 10 ($cm^3/g$)) after the hydrocarbon gas content was confirmed to be below the lower limit of detection (0.01 mass%). Note that secondary processing such as machining and adhesion was performed to obtain a cover because the obtained extruded foam was a plate-shaped foam.

[Resin plate]

(1) 442Z

Xyron 442Z (manufactured by Asahi Kasei Corporation) was laid in a mold, and a resin plate was made by heat pressing method at a temperature of 300 °C and a mold clamping force of 10 MPa.

(2) PC

Polycarbonate (LEXAN EXL9330 manufactured by Sabic) was laid in a mold, and a resin plate was made by a heat press method at a temperature of 300 °C and a mold clamping force of 10 MPa.

(3) 340Z

Xyron 340Z (manufactured by Asahi Kasei Corporation) was laid in a mold, and a resin plate was made by heat pressing method at a temperature of 300 °C and a mold clamping force of 10 MPa.

(Example 1)

Foam 2.5 (thickness: 3 mm) was used as the first layer and Foam 3 (thickness: 3 mm) was used as the second layer. They were laminated by heating the bonding surfaces of the both layers with a heat gun to obtain a cover (300 mm × 300 mm × 6 mm in thickness).

Evaluation results of the properties of the obtained cover are summarized in Table 1.

(Examples 2 to 28 and Comparative Examples 1 to 4)

Covers were obtained in the same manner as in Example 1, except that the material and the thickness of each layer, the number of layers, or the like were changed as summarized in Table 1.

Evaluation results of the properties of the obtained covers are summarized in Table 1.

The oblique transmittance of TE wave at angles of incidence of 30 ° and 45 ° and the oblique transmittance of TM wave at angles of incidence of 30 °, 45 °, and 60 ° were also measured for Examples 3, 10, 11, 13, 21, 27, and 28, and Comparative Example 1, as described above.

In addition, for Examples 3, 10, 11, 13, 21, and 27, and Comparative Example 1, covers were also made by increasing by 1 mm and decreasing by 1 mm the overall thicknesses of the cover without changing the thickness ratio of each layer, and values of the properties were determined as summarized in Table 1.

(Examples 31 to 44 and Comparative Examples 11 to 14)

Covers were obtained in the same manner as in Example 1, except that the material and the thickness of each layer, the number of layers, or the like were changed as summarized in Table 2.

Measurement and evaluation results of the properties of the obtained covers are summarized in Table 2.

Note that, as mentioned above, the radio wave transmittance and radio wave reflectance of Examples 31 to 44 and Comparative Examples 11 to 14 were measured at the frequencies listed in Table 2.

(Reference Example 1)

A foam with an expansion ratio of 10 times was produced in a similar manner to Foam 10 with the exception that in production of foam particles from base resin pellets, the time taken until heating (introduction of pressurized steam) started from the point at which release of impregnation pressure was completed was changed to 600 seconds.

The maximum cell diameter of the obtained foam was 1745 μm, and B'/A and B'/A' were 0.03 and 0.04, respectively.

Tables 1-1 to 1-4 summarize the radio transmission and other measurement results at the frequency of 28 GHz. Tables 2-1 and 2-2 summarize the radio transmission and other measured results at various frequencies.

[Table 1-1]

| | | | | Examples | | | | | | | | | |
|---|---|---|---|---|---|---|---|---|---|---|---|---|---|
| | | | | 1 | 2 | 3 | 4 | 5 | 6 | 7 | 8 | 9 | 10 |
| Cover | First layer | Material | - | Foam2.5 | Foam3.5 | Foam3.5 | Foam2.5 | Foam3.5 | Foam3.5 | Foam2.5 | Foam3 | Foam3 | 442Z |
| | | Thickness $d_1$ | m | 0.0030 | 0.0050 | 0.0050 | 0.0030 | 0.0020 | 0.0030 | 0.0030 | 0.0030 | 0.0030 | 0.0003 |
| | | Density | $g/cm^3$ | 0.40 | 0.29 | 0.29 | 0.40 | 0.29 | 0.29 | 0.40 | 0.33 | 0.33 | 1.10 |
| | | Relative permittivity | - | 1.60 | 1.41 | 1.41 | 1.60 | 1.41 | 1.41 | 1.60 | 1.49 | 1.49 | 2.50 |
| | | Dielectric dissipation factor | - | 0.00405 | 0.00313 | 0.00313 | 0.00405 | 0.00313 | 0.00313 | 0.00405 | 000353 | 0.00353 | 0.00438 |
| | | Magnitude $N_1$ of complexrefrective index | - | 1.263 | 1.190 | 1.190 | 1.263 | 1.190 | 1.190 | 1.263 | 1.220 | 1.220 | 1.581 |
| | | $d_1 \times N_1 \div \lambda_0$ | - | 0.354 | 0.555 | 0.555 | 0.354 | 0.222 | 0333 | 0.354 | 0.342 | 0.342 | 0.044 |
| | | Flame retardancy level | - | V-0 | V-0 | V-0 | V-0 | V-0 | V-0 | V-0 | V-0 | V-0 | V-0 |
| | | B/A | - | - | - | - | - | - | - | - | - | - | - |
| | | B'/A | - | 0.66 | 0.61 | 0.61 | 0.66 | 0.61 | 0.61 | 0.66 | 0.65 | 0.65 | - |
| | | B'/A' | - | 1.19 | 1.11 | 1.11 | 1.19 | 1.11 | 1.11 | 1.19 | 1.25 | 1.25 | - |
| | | Maximun cell diameter | mm | 313 | 287 | 287 | 313 | 287 | 287 | 313 | 305 | 305 | - |
| | Second layer | Material | - | Foam3 | Foam5 | Foam5 | Foam5 | Foam5 | Foam5 | Foam3.5 | Foam10 | Foam5.8 | Foam10 |
| | | Thickness $d_2$ | m | 0.0030 | 0.0040 | 0.0030 | 0.0030 | 0.0020 | 0.0030 | 0.0030 | 0.0030 | 0.0030 | 0.0027 |
| | | Density | $g/cm^3$ | 0.33 | 0.20 | 0.20 | 0.20 | 0.20 | 0.20 | 0.29 | 0.10 | 0.17 | 0.10 |
| | | Relative permittivity | - | 1.49 | 1.28 | 1.28 | 1.28 | 1.28 | 1.29 | 1.41 | 1.14 | 1.24 | 1.14 |
| | | Dielectric dissipation factor | - | 0.00353 | 0.00234 | 0.00234 | 0.00234 | 0.00234 | 0.00234 | 0.00313 | 0.00140 | 0.00206 | 0.00140 |
| | | Magnitude $N_2$ of complexrefrective index | - | 1.220 | 1.134 | 1.134 | 1.134 | 1.134 | 1.134 | 1.190 | 1.068 | 1.115 | 1.068 |
| | | $d_2 \times N_2 \div \lambda_0$ | - | 0.342 | 0.423 | 0.318 | 0.318 | 0.212 | 0.318 | 0.333 | 0.299 | 0.313 | 0.269 |

(continued)

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Flame retardancy level | - | V-0 | V-0 | V-0 | V-0 | V-0 | V-0 | V-0 | V-0 | V-0 | V-0 |
| B/A | - | - | - | - | - | - | - | - | - | - | - |
| B'/A | - | 0.65 | 0.81 | 0.81 | 0.81 | 0.81 | 0.81 | 0.61 | 0.91 | 0.78 | 0.91 |
| B'/A' | - | 1.25 | 1.29 | 1.29 | 1.29 | 1.29 | 1.29 | 1.11 | 0.78 | 1.16 | 0.78 |
| Maximun cell diameter | mm | 305 | 78 | 78 | 78 | 78 | 78 | 297 | 103 | 126 | 103 |
| A | - | 0.20 | 0.02 | 0.13 | 0.17 | 0.066 | 0.15 | 0.19 | 0.14 | 0.15 | 0.19 |
| Frontal direction transmittance X | % | 95.0 | 99.3 | 97.8 | 96.0 | 98.7 | 97.5 | 95.0 | 97.2 | 97.0 | 98.2 |
| Oblique trananittance ofTE wave (angle of incidence: 30°) | % | - | - | 96.0 | - | - | - | - | - | - | 97.2 |
| Oblique trananittance ofTE wave (angle of incidence: 45°) | % | - | - | 93.7 | - | - | - | - | - | - | 94.9 |
| Oblique transmittance of TE wave Y (angle of incidence: 60°) | % | 95.8 | 97.4 | 94.1 | 91.1 | 82.5 | 94.1 | 95.8 | 95.3 | 91.2 | 87.8 |
| Oblique transmittance of TM wave (angle of incidence: 30°) | % | - | - | 97.6 | - | - | - | - | - | - | 98.6 |
| Oblique transmittance of TM wave (angle of incidence: 45°) | % | - | - | 98.0 | - | - | - | - | - | - | 99.2 |
| Oblique transmittance of TM wave (angle of incidence: 60°) | % | - | - | 97.3 | - | - | - | - | - | - | 98.8 |
| (100 - frontal transmittance X) × (100 - oblique transmittance Y) | - | 20.8 | 21.9 | 13.1 | 35.7 | 23.2 | 14.7 | 20.8 | 41.6 | 26.6 | 21.9 |
| Frontal trananittance X - oblique transmittance Y | % | -0.8 | 10.9 | 3.6 | 4.9 | 16.1 | 3.4 | -0.9 | 11.9 | 5.8 | 10.4 |
| Frontal reflectance | % | 3.4 | 0.0 | 0.7 | 2.7 | 0.6 | 1.5 | 3.4 | 1.8 | 1.9 | 1.4 |

(continued)

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| | Oblique reflectance ofTE wave (angle of incidence: 60°) | % | 1.9 | 10.2 | 3.5 | 7.1 | 16.5 | 4.5 | 1.9 | 13.4 | 7.3 | 11.5 |
| | \| Refractive index of air - magnitude $N_1$ of complex refractive index of first layer I | - | 0.263 | 0.190 | 0.190 | 0.263 | 0.190 | 0.190 | 0.263 | 0.220 | 0.220 | 0.581 |
| | \| Magnitude $N_1$ of complex refractive index of first layer - magnitude $N_2$ of complex refractive index of second layer I | - | 0.043 | 0.056 | 0.056 | 0.130 | 0.056 | 0.056 | 0.074 | 0.153 | 0.105 | 0.513 |
| | \| Magnitude $N_2$ of complexrefrective index of second layer - Refractive index of air \| | - | 0.220 | 0.134 | 0.134 | 0.134 | 0.134 | 0.134 | 0.190 | 0.068 | 0.115 | 0.068 |
| | Load at 1-mm deflection with width of 10 mm | N | - | - | - | - | - | 6.5 | - | - | - | 0.5 |
| | \| Magnitude $M_{12}$ of $m_{12}$ component - magnitude $M_{21}$ of $m_{21}$ component in characteristic matrix \| (angle of incidence: 0°) | - | 0.37 | 0.00 | 0.17 | 0.29 | 0.12 | 0.24 | 0.37 | 0.17 | 0.24 | 0.09 |
| | Magnitude $M_{11}$ of $m_{11}$ component in characteristic matrix(angle of incidence: 60° TE wave) | - | 0.93 | 0.50 | 0.79 | 0.78 | 0.18 | 0.82 | 0.88 | 0.62 | 0.75 | 0.44 |

(continued)

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| When thickness of cover was set to +1 mm | Magnitude $M_{11}$ of $m_{11}$ component in characteristic matrix(angle of incidence: 60° TE wave) | , | , | , | 0.50 | , | , | , | , | , | , | 0.10 |
| | \| Magnitude $M_{12}$ of $m_{12}$ component - magnitude $M_{21}$ of $m_{21}$ component in characteristic matrix I (angle of incidence: 0°) | - | - | - | 0.01 | - | - | - | - | - | - | 0.12 |
| | Frontal direction transmittance X | % | - | - | 98.2 | - | - | - | - | - | - | 97.8 |
| | Oblique transmittance of TE wave Y (angle of incidence: 60°) | % | - | - | 88.1 | - | - | - | - | - | - | 86.6 |
| | (100 - frontal transmittance X) × (100 - oblique transmittance Y) | - | - | - | 21.8 | - | - | - | - | - | - | 28.9 |
| | Frontal trananittance X - oblique transmittance Y | % | - | - | 10.0 | - | - | - | - | - | - | 11.2 |
| | A | - | - | - | 0.02 | - | - | - | - | - | - | 0.082 |

(continued)

| | | | Examples | | | | | | | | | |
|---|---|---|---|---|---|---|---|---|---|---|---|---|
| | | | 1 | 2 | 3 | 4 | 5 | 6 | 7 | 8 | 9 | 10 |
| When thickness of cover was set to - 1 mm | Magnitude $M_{11}$ of $m_{11}$ component in characteristic matrix(angle of incidence: 60° TE wave) | - | - | - | 0.80 | | - | - | - | - | - | 0.74 |
| | \| Magnitude $M_{12}$ of $m_{12}$ component - magnitude $M_{21}$ of $m_{21}$ component in characteristic matrix \| (angle of incidence: 0°) | - | - | - | 0.25 | - | - | - | - | - | - | 0.19 |
| | Frontal direction transmittance X | % | - | - | 97.1 | - | - | - | - | - | - | 99.4 |
| | Oblique transmittance of TE wave Y (angle of incidence: 60°) | % | - | - | 97.1 | - | - | - | - | - | - | 92.0 |
| | (100 - frontal transmittance X) × (100 - oblique transmittance Y) | - | - | - | 8.3 | - | - | - | - | - | - | 12.8 |
| | Frontal trananittance X - oblique transmittance Y | % | - | - | 0.0 | - | - | - | - | - | - | 6.4 |
| | A | - | - | - | 0.24 | - | - | - | - | - | - | 0.21 |

[Table 1-2]

| | | | | Examples | | | | | | | | | |
|---|---|---|---|---|---|---|---|---|---|---|---|---|---|
| | | | | 11 | 12 | 13 | 14 | 15 | 16 | 17 | 18 | 19 | 20 |
| Cover | First layer | Material | - | Foam3.5 | Foam5 | Foam7 | Foam2 | Foam2 | Foam 10 | Foam 10 | Foam3 | Foam7 | Foam3.5 |
| | | Thickness $d_1$ | m | 0.0050 | 0.0040 | 0.0050 | 0.0030 | 0.0020 | 0.0050 | 0.0040 | 0.0030 | 0.0030 | 0.0050 |
| | | Density | $g/cm^3$ | 0.29 | 0.20 | 0.14 | 0.50 | 0.50 | 0.10 | 0.10 | 0.33 | 0.14 | 0.29 |
| | | Relative permittivity | - | 1.41 | 1.25 | 1.20 | 1.76 | 1.76 | 1.14 | 1.14 | 1.49 | 1.20 | 1.41 |
| | | Dielectric dissipation factor | - | 0.00313 | 0.00290 | 0.00175 | 000477 | 000477 | 0.00140 | 0.00140 | 0.00353 | 0.00175 | 0.00313 |
| | | Magnitude $N_1$ of complexrefrective index | - | 1.190 | 1.118 | 1.096 | 1.328 | 1.328 | 1.068 | 1.068 | 1.220 | 1.096 | 1.190 |
| | | $d_1 \times N_1 \div \lambda_0$ | - | 0.555 | 0.418 | 0.512 | 0.372 | 0.248 | 0.499 | 0.399 | 0.342 | 0.307 | 0.555 |
| | | Flame retardancy level | - | V-0 | V-0 | V-0 | V-0 | V-0 | V-0 | V-0 | V-0 | V-0 | V-0 |
| | | B/A | - | - | - | - | - | - | - | - | - | - | - |
| | | B'/A | - | 0.61 | 0.81 | 0.70 | 0.61 | 0.61 | 0.91 | 0.91 | 0.65 | 0.70 | 0.61 |
| | | B'/A' | - | 1.11 | 1.29 | 1.17 | 1.25 | 1.25 | 0.78 | 0.78 | 1.25 | 1.17 | 1.11 |
| | | Maximun cell diameter | mm | 287 | 78 | 122 | 363 | 363 | 103 | 103 | 305 | 122 | 287 |
| | | Material | - | - | - | - | Foam3 | Foam3 | Foam3 | Foam3 | Foam10 | Foam3 | Foam5 |
| | | Thickness $d_2$ | m | - | - | - | 0.0030 | 0.0030 | 0.0030 | 0.0030 | 0.0030 | 0.0030 | 0.0050 |
| | | Density | g/cm3 | - | - | - | 0.33 | 033 | 033 | 033 | 0.10 | 0.33 | 0.20 |
| | | Relative permittivity | - | - | - | - | 1.49 | 1.49 | 1.49 | 1.49 | 1.14 | 1.49 | 1.28 |
| | | Dielectric dissipation factor | - | - | - | - | 0.00353 | 0.00353 | 000353 | 0.00353 | 0.00140 | 0.00353 | 0.00234 |
| | | Magnitude $N_2$ of complexrefrective index | - | - | - | - | 1.220 | 1.220 | 1.220 | 1.220 | 1.068 | 1.220 | 1.134 |

(continued)

| | | | | Examples | | | | | | | | | |
|---|---|---|---|---|---|---|---|---|---|---|---|---|---|
| | | | | 11 | 12 | 13 | 14 | 15 | 16 | 17 | 18 | 19 | 20 |
| | Second layer | $d_2 \times N_2 \div \lambda_0$ | - | - | - | - | 0.342 | 0.342 | 0.342 | 0.342 | 0.299 | 0.342 | 0.529 |
| | | Flame retardancy level | - | - | - | - | V-0 | V-0 | V-0 | V-0 | V-0 | V-0 | V-0 |
| | | B/A | - | - | - | - | - | - | - | - | - | - | - |
| | | B'/A | - | - | - | - | 0.65 | 0.65 | 0.65 | 0.65 | 0.91 | 0.65 | 0.81 |
| | | B'/A' | - | - | - | - | 1.25 | 1.25 | 1.25 | 1.25 | 0.78 | 1.25 | 1.29 |
| | | Maximun cell diameter | mm | - | - | - | 305 | 305 | 305 | 305 | 103 | 305 | 78 |
| | A | | - | 0.055 | 0.082 | 0.012 | 0.214 | 0.090 | 0.159 | 0.241 | 0.141 | 0.149 | 0.085 |
| | Frontal direction transnittance X | | % | 98.5 | 99.9 | 99.4 | 93.0 | 95.7 | 96.1 | 96.1 | 97.2 | 97.1 | 97.5 |
| | Oblique transmittance ofTE wave (angle of incidence: 30°) | | % | 98.8 | - | 99.3 | - | - | - | - | - | - | - |
| | Oblique transmittance ofTE wave (angle of incidence: 45°) | | % | 97.6 | - | 98.2 | - | - | - | - | - | - | - |
| | Oblique transmittance of TE wave Y (angle of incidence: 60°) | | % | 99.0 | 99.0 | 92.1 | 94.3 | 900 | 97.9 | 99.6 | 95.3 | 89.0 | 92.1 |
| | Oblique transmittance of TM wave (angle of incidence: 30°) | | % | 98.8 | - | 99.3 | - | - | - | - | - | - | - |
| | Oblique transmittance of TM wave (angle of incidence: 45 °) | | % | 98.6 | - | 99.3 | - | - | - | - | - | - | - |
| | Oblique transmittance of TM wave (angle of incidence: 60°) | | % | 97.5 | - | 98.0 | - | - | - | - | - | - | - |
| | (100 - frontal transmittance X) × (100 - oblique transmittance Y) | | - | 17.6 | 126 | 4.5 | 39.6 | 43.0 | 47.0 | 43.9 | 41.6 | 31.6 | 44.8 |
| | Frontal transmittance X - oblique transmittance Y | | % | 10.6 | 11.0 | 7.3 | 13 | 5.7 | 8.2 | 7.5 | 11.9 | 8.2 | 15.4 |

(continued)

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| | Frontal reflectance | % | 0.3 | 0.3 | 0.0 | 5.2 | 2.8 | 2.7 | 2.8 | 1.8 | 1.8 | 0.6 |
| | Oblique reflectance ofTE wave (angle of incidence: 60°) | % | 10.6 | 10.9 | 7.0 | 3.0 | 8.0 | 100 | 9.6 | 13.4 | 9.4 | 15.4 |
| | \| Refractive index of air - magnitude $N_1$ of complexrefrective index of first layer I | - | 0.190 | 0.118 | 0.096 | 0.328 | 0.329 | 0.068 | 0.068 | 0.220 | 0.096 | 0.190 |
| | \| Magnitude $N_1$ of complexrefrective index of first layer - magnitude $N_2$ of complexrefrective index of second layer I | - | - | - | - | 0.107 | 0.107 | 0.153 | 0.153 | 0.153 | 0.124 | 0.056 |
| | \| Magnitude $N_H$ of complexrefrective index of $N^{th}$ layer* - Refractive index of air I | - | 0.190 | 0.118 | 0.096 | 0.220 | 0.220 | 0.220 | 0.220 | 0.068 | 0.220 | 0.134 |
| | Load at 1-mm deflection with width of 10 mm | N | 2.3 | - | 1.3 | - | - | - | - | - | - | - |
| | I Magnitude $M_{12}$ of $m_{12}$ component - magnitude $M_{21}$ of $m_{21}$ component in characteristic matrix I (angle of incidence: 0°) | - | 0.12 | 0.11 | 0.01 | 0.46 | 0.31 | 0.34 | 0.31 | 0.17 | 0.21 | 0.16 |
| | Magnitude $M_{11}$ of $m_{11}$ component in characteristic matrix (angle of incidence: 60° TE wave) | - | 0.73 | 0.09 | 0.39 | 0.85 | 0.77 | 0.72 | 0.72 | 0.62 | 0.70 | 0.11 |

(continued)

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| When thickness of cover was set to +1 mm | Magnitude $M_{11}$ of $m_{11}$ component in characteristic matrix (angle of incidence: 60° TE wave) | - | 0.96 | - | 0.71 | - | - | - | - | - | - | - |
| | \| Magnitude $M_{12}$ of $m_{12}$ component - magnitude $M_{21}$ of $m_{21}$ component in characteristic matrix I (angle of incidence: 0°) | - | 0.30 | - | 0.12 | - | - | - | - | - | - | - |
| | Frontal direction transmittance X | % | 96.5 | - | 99.0 | - | - | - | - | - | - | - |
| | Oblique transmittance of TE wave Y (angle of incidence: 60°) | % | 962 | - | 94.8 | - | - | - | - | - | - | - |
| | (100 - frontal transmittance X) × (100 - oblique transmittance Y) | - | 13.3 | - | 5.4 | - | - | - | - | - | - | - |
| | Frontal transmittance X - oblique transmittance Y | % | 0.292 | - | 4.174 | - | - | - | - | - | - | - |
| | A | - | 0.167 | - | 0.114 | - | - | - | - | - | - | - |

(continued)

| | | | Examples | | | | | | | | | |
|---|---|---|---|---|---|---|---|---|---|---|---|---|
| | | | 11 | 12 | 13 | 14 | 15 | 16 | 17 | 18 | 19 | 20 |
| When thickness of cover was set to -1 mm | Magnitude $M_{11}$ of $m_{11}$ component in characteristic matrix (angle of incidence: 60° TE wave) | - | 0.34 | - | 0.01 | - | - | - | - | - | - | - |
| | I Magnitude $M_{12}$ of $m_{12}$ component - magnitude $M_{21}$ of $m_{21}$ component in characteristic matrix I (angle of incidence: 0°) | - | 0.12 | - | 0.10 | - | - | - | - | - | - | - |
| | Frontal direction transmittance X | % | 98.8 | - | 99.3 | - | - | - | - | - | - | - |
| | TE wave oblique transmittance Y (angle of incidence: 60°) | % | 80.4 | - | 91.2 | - | - | - | - | - | - | - |
| | (100 - frontal transmittance X) × (100 - oblique transmittance Y) | - | 23.8 | - | 6.0 | - | - | - | - | - | - | - |
| | Frontal transmittance X - oblique transmittance Y | % | 19.342 | - | 8.122 | - | - | - | - | - | - | - |
| | A | - | 0.056 | - | 0.091 | - | - | - | - | - | - | - |

* "$N^{th}$ layer" means "first layer" in Examples 11 to 13 and "second layer" in Examples 14 to 20.

[Table 1-3]

| | | | | Examples | | | | | | | |
|---|---|---|---|---|---|---|---|---|---|---|---|
| | | | | 21 | 22 | 23 | 24 | 25 | 26 | 27 | 28 |
| Cover | First | Material | - | 340Z | 442Z | Foam 35 | Foam 3 | Foam 3 | Foam 3.5 | 442Z | 442Z |
| | | Thickness $d_1$ | m | 0.0005 | 0.0003 | 0.0025 | 0.0030 | 0.0030 | 0.0015 | 0.0005 | 0.0005 |
| | | Density | $g/cm^3$ | 1.10 | 1.10 | 0.79 | 0.33 | 0.33 | 0.29 | 1.10 | 1.10 |
| | | Relative permittivity | - | 2.58 | 2.50 | 1.41 | 1.49 | 1.49 | 1.41 | 2.50 | 2.50 |
| | | Dielectric dissipation factor | - | 0.00450 | 0.00438 | 0.00313 | 0.00353 | 0.00353 | 0.00313 | 0.00438 | 0.00438 |
| | | Magnitude $N_1$ of complex refractive index | - | 1.606 | 1.581 | 1.190 | 1.220 | 1.220 | 1.190 | 1.581 | 1.581 |
| | | $d_1 \times N_1 \div \lambda_0$ | - | 0.075 | 0.044 | 0.278 | 0.342 | 0.342 | 0.167 | 0.074 | 0.074 |
| | | Flame retardancy level | - | V-0 | V-0 | V-0 | V-0 | V-0 | V-0 | V-0 | V-0 |
| | | B/A | - | - | - | - | - | - | - | - | - |
| | | B'/A | - | - | - | 0.61 | 0.65 | 0.65 | 0.61 | - | - |
| | | B'/A' | - | - | - | 1.11 | 1.25 | 1.25 | 1.11 | - | - |
| | | Maximun cell diameter | mm | - | - | 287 | 305 | 305 | 287 | - | - |
| | | Material | - | Foam 10 | Foam 7 | Foam 5 | Foam EE15 | Foam XE10 | Foam 5 | Foam 7 | Foam 35 |
| | | Thickness $d_2$ | m | 0.0015 | 0.0027 | 0.0021 | 0.0030 | 0.0035 | 0.0015 | 0.0020 | 0.0020 |
| | | Density | $g/cm^3$ | 0.10 | 0.14 | 0.20 | 0.07 | 0.10 | 0.20 | 0.14 | 0.29 |
| | | Relative permittivity | - | 1.14 | 1.20 | 1.28 | 1.09 | 1.12 | 1.28 | 1.20 | 1.41 |
| | | Dielectric dissipation factor | - | 0.00140 | 0.00175 | 0.00234 | 0.00020 | 0.00020 | 0.00234 | 0.00175 | 0.00313 |

(continued)

| | | | | Examples | | | | | | | |
|---|---|---|---|---|---|---|---|---|---|---|---|
| | | | | 21 | 22 | 23 | 24 | 25 | 26 | 27 | 28 |
| | Second layer | Magnitude $N_2$ of complex refractive index | - | 1.068 | 1.096 | 1.134 | 1.044 | 1.058 | 1.134 | 1.096 | 1.190 |
| | | $d_2 \times N_2 \div \lambda_0$ | - | 0.150 | 0.276 | 0.222 | 0.293 | 0.346 | 0.159 | 0.205 | 0.222 |
| | | Flame retardancy level | - | V-0 | V-0 | V-0 | × | × | V-0 | V-0 | V-0 |
| | | B/A | - | - | - | - | - | 1.560 | - | - | - |
| | | B'/A | - | 0.91 | 0.70 | 0.81 | 1.09 | - | 0.81 | 0.70 | 0.61 |
| | | B'/A' | - | 0.78 | 1.17 | 1.29 | 1.16 | - | 1.29 | 1.17 | 1.11 |
| | | Maximun cell diameter | mm | 103 | 122 | 78 | 160 | 1439 | 78 | 122 | 287 |
| | Third layer | Material | - | Foam 2.3 | - | - | - | - | - | 442Z | 442Z |
| | | Thickness $d_3$ | m | 0.003 | - | - | - | - | - | 0.0005 | 0.0005 |
| | | Density | $g/cm^3$ | 0.43 | - | - | - | - | - | 1.10 | 1.10 |
| | | Relative permittivity | - | 1.65 | - | - | - | - | - | 2.50 | 2.50 |
| | | Dielectric dissipation factor | - | 0.00431 | - | - | - | - | - | 0.00438 | 0.00438 |
| | | Magnitude $N_3$ of complex refractive index | - | 1.286 | - | - | - | - | - | 1.581 | 1.581 |
| | | $d_3 \times N_3 \div \lambda_0$ | - | 0.360 | - | - | - | - | - | 0.074 | 0.074 |
| | | Flame retardancy level | - | V-0 | - | - | - | - | - | V-0 | V-0 |
| | | B/A | - | - | - | - | - | - | - | - | - |
| | | B'/A | - | 0.64 | - | | - | - | - | - | - |
| | | B'/A' | | 1.28 | - | - | - | - | - | - | - |

(continued)

| | | | | Examples | | | | | | | |
|---|---|---|---|---|---|---|---|---|---|---|---|
| | | | | 21 | 22 | 23 | 24 | 25 | 26 | 27 | 28 |
| | | Maximun cell diameter | mm | 350 | - | - | - | - | - | - | - |
| | A | | - | 0.085 | 0.179 | 0.000 | 0.134 | 0.188 | 0.175 | 0.148 | 0.130 |
| | Frontal direction transmittance X | | % | 92.2 | 98.1 | 98.9 | 97.2 | 96.9 | 97.6 | 99.2 | 98.9 |
| | Oblique transmittance of TE wave (angle of incidence 30°) | | % | 93.0 | - | - | - | - | - | 98.5 | 97.3 |
| | Oblique transmittance of TE wave (angle of incidence 45°) | | % | 95.3 | - | - | - | - | - | 97.6 | 91.8 |
| | Oblique transmittance of TE wave Y (angle of incidence 60°) | | % | 95.8 | 85.1 | 84.4 | 82.0 | 861. | 82.7 | 80.1 | 74.3 |
| | Oblique transmittance of TM wave (angle of incidence 30°) | | % | 963 | - | - | - | - | - | 990 | 985 |
| | Oblique transmittance of TM wave (angle of incidence 45°) | | % | 981 | - | - | - | - | - | 990 | 988 |
| | Oblique transmittance of TM wave (angle of incidence 60°) | | % | 97.3 | - | - | - | - | - | 982 | 97.3 |
| | (100 - frontal transmittance X) × (100 - oblique transmittance Y) | | - | 32.8 | 28.2 | 17.0 | 49.8 | 43.4 | 42.0 | 15.7 | 29.0 |
| | Frontal transmittance X - oblique transmittance Y | | % | -3.5 | 13.0 | 14.5 | 15.2 | 10.7 | 14.8 | 19.1 | 24.6 |
| | Frontal reflectance | | % | 6.3 | 1.4 | 0.2 | 2.0 | 2.4 | 1.9 | 0.0 | 0.2 |
| | Oblique reflectance of TE wave (angle of incidence 60°) | | % | 1.9 | 14.2 | 14.5 | 17.1 | 12.9 | 16.5 | 19.0 | 24.7 |
| | \| Refractive index of air - magnitude $N_1$ of complex refractive index of first layer | | - | 0.606 | 0.581 | 0.190 | 0.220 | 0.220 | 0.190 | 0.581 | 0.581 |
| | \| Magnitude $N_1$ of complex refractive index of first layer - magnitude $N_2$ of complex refractive index of second layer | | - | 0.539 | 0.485 | 0.056 | 0.176 | 0.162 | 0.056 | 0.485 | 0.392 |

(continued)

| | | | Examples | | | | | | | |
|---|---|---|---|---|---|---|---|---|---|---|
| | | | 21 | 22 | 23 | 24 | 25 | 26 | 27 | 28 |
| | \| Magnitude $N_2$ of complex refractive index of second layer - magnitude $N_3$ of complex refractive index of third layer | - | 0.218 | - | - | - | - | - | 0.485 | 0.392 |
| | \| Magnitude $N_N$ of complex refractive index of $N^{th}$ layer* - Refractive index of air | - | 0.286 | 0.096 | 0.134 | 0.044 | 0.058 | 0.134 | 0.581 | 0.581 |
| | Load at 1-mm deflection with width of 10 mm | N | 9.9 | - | - | - | - | - | 5.4 | - |
| | \| Magnitude $M_{12}$ of $m_{12}$ component - magnitude $M_{21}$ of $m_{21}$ component in characteristic matrix \| (angle of incidence: 0°) | - | 0.42 | 0.13 | 0.00 | 0.13 | 0.24 | 0.27 | 0.00 | 0.09 |
| | Magnitude $M_{11}$ of $m_{11}$ component in characteristic matrix (angle of incidence 60°TE wave) | - | 0.82 | 0.37 | 0.43 | 0.55 | 0.65 | 0.25 | 0.11 | 0.23 |
| When thickness of cover was set to +1 mm | Magnitude $M_{11}$ of $m_{11}$ component in characteristic matrix (angle of incidence 60°TE wave) | - | 0.83 | - | - | - | - | - | 0.67 | - |
| | \| Magnitude $M_{12}$ of $m_{12}$ component magnitude $M_{21}$ of $m_{21}$ characteristic matrix \| (angle of incidence 0°) | - | 0.50 | - | - | - | - | - | 0.11 | - |
| | Frontal direction transmittance X | % | 88.4 | - | - | - | - | - | 90.2 | - |
| | Oblique transmittance of TE wave Y (angle of incidence 60°) | % | 86.9 | - | - | - | - | - | 96.2 | - |
| | (100 - frontal transmittance X) × (100 - oblique transmittance Y) | - | 152.2 | - | - | - | - | - | 37.0 | - |
| | Frontal transmittance X - oblique transmittance Y | % | 1.5 | - | - | - | - | - | -6.0 | - |
| | A | - | 0.202 | - | - | - | - | - | 0.030 | - |

(continued)

| | | | Examples | | | | | | | |
|---|---|---|---|---|---|---|---|---|---|---|
| | | | 21 | 22 | 23 | 24 | 25 | 26 | 27 | 28 |
| When thickness of cover was set to | Magnitude $M_{11}$ of $m_{11}$ component in characteristic matrix (angle of incidence: 60°TE wave) | - | 0.52 | - | - | - | - | - | 0.44 | - |
| | \| Magnitude $M_{12}$ of $m_{12}$ component - magnitude $M_{21}$ of $m_{21}$ component in characteristic matrix \| (angle of incidence 0°) | - | 0.09 | - | - | - | - | - | 0.36 | - |
| | Frontal direction transmittance X | % | 98.0 | - | - | - | - | - | 96.5 | - |
| | Oblique transmittance of TE wave Y (angle of incidence 60°) | % | 83.6 | - | - | - | - | - | 76.7 | - |
| | (100 - frontal transmittance X) × (100 - oblique transmittance Y) | - | 33.3 | - | - | - | - | - | 82.6 | - |
| | Frontal transmittance X - oblique transmittance Y | % | 14.4 | - | - | - | - | - | 19.7 | - |
| | A | - | 0.032 | - | - | - | - | - | 0.235 | - |

* "$N^{th}$ layer" means "second layer" in Examples 22 to 26 and "third layer" in Examples 21, 27, and 28.

[Table 1-4]

| | | | | Comparative Example | | | |
|---|---|---|---|---|---|---|---|
| | | | | 1 | 2 | 3 | 4 |
| Cover | First | Material | - | PC | Foam 3.5 | Foam 1.5 | 340Z |
| | | Thickness $d_1$ | m | 00030 | 00030 | 00030 | 00005 |
| | | Density | $g/cm^3$ | 119 | 079 | 0.67 | 110 |
| | | Relative permittivity | - | 2.85 | 141 | 206 | 258 |
| | | Dielectric dissipation factor | - | 0.00780 | 000313 | 000583 | 0.00450 |
| | | Magnitude $N_1$ of complex refractive index | - | 1.688 | 1.190 | 1.435 | 1606 |
| | | $d_1 \times N_1 + \lambda_0$ | - | 0473 | 0333 | 0402 | 0075 |
| | | Flame retardancy level | - | V-0 | V-0 | V-0 | V-0 |
| | | B/A | - | - | - | - | - |
| | | B'/A | - | - | 0.61 | 0.67 | - |
| | | B'/A' | - | - | 1.11 | 119 | - |
| | | Maximun cell diameter | mm | - | 287 | 324 | - |
| | Second layer | Material | - | - | - | Foam 5 | Foam 10 |
| | | Thickness $d_2$ | m | - | - | 00030 | 00015 |
| | | Density | $g/cm^3$ | - | - | 020 | 0.10 |
| | | Relative permittivity | - | - | - | 128 | 114 |
| | | Dielectric dissipation factor | - | - | - | 000234 | 000140 |
| | | Magnitude $N_2$ of complex refractive index | - | - | - | 1.134 | 1068 |
| | | $d_2 \times N_2 \div \lambda_0$ | - | - | - | 0318 | 0150 |
| | | Flame retardancy level | - | - | - | V-D | V-0 |
| | | B/A | - | - | - | - | - |
| | | B'/A | - | - | - | 0.81 | 091 |
| | | B'/A' | - | - | - | 129 | 078 |
| | | Maximun cell diameter | mm | - | - | 78 | 103 |

(continued)

| | | | | Comparative Example | | | |
|---|---|---|---|---|---|---|---|
| | | | | 1 | 2 | 3 | 4 |
| | Third layer | Material | - | - | - | - | Foam 23 |
| | | Thickness $d_3$ | m | - | - | - | 0010 |
| | | Density | $g/cm^3$ | - | - | - | 043 |
| | | Permittivity | - | - | - | - | 165 |
| | | Dielectric dissipation factor | - | - | - | - | 000731 |
| | | Magnitude $N_3$ or | - | - | - | - | 1286 |
| | | $d_3 \times N_3 \div \lambda_0$ | - | - | - | - | 1.201 |
| | | Flame retardancy level | - | - | - | - | V-D |
| | | B/A | - | - | - | - | - |
| | | B'/A | - | - | - | - | 0.64 |
| | | B'/A' | - | - | - | - | 128 |
| | | Maximun cell diameter | mm | - | - | - | 350 |
| | A | | - | 0.027 | 0.167 | 022 | 0074 |
| | Frontal direction tiansmittance X | | % | 966 | 97.2 | 936 | 958 |
| | Oblique transmittance of TE wave (angle of incidence: 30°) | | % | 937 | - | - | - |
| | Oblique transmittance of TE wave (angle of incidence: 45°) | | % | 858 | - | - | - |
| | Oblique transmittance of TE wave Y (angle of incidence: 60°) | | % | 64 7 | 790 | 835 | 853 |
| | Oblique transmittance of TM wave (angle of incidence: 30°) | | % | 959 | - | - | - |
| | Oblique transmittance of TM wave (angle of incidence: 45°) | | % | 961 | - | - | - |
| | Oblique transmittance of TM wave (angle of incidence: 60°) | | % | 97.3 | - | - | - |
| | (100 - frontal transmittance X) × (100 - oblique transmittance Y) | | - | 118.6 | 597 | 106.1 | 624 |
| | Frontal transmittance X - oblique transmittance Y | | % | 32.0 | 18 1 | 101 | 105 |
| | Frontal reflectance | | % | 08 | 22 | 46 | 05 |
| | Oblique reflectance of TE wave (angle of incidence: 60°) | | % | 329 | 20 1 | 144 | 93 |
| | Refractive index of air -magnitude $N_1$ of complex refractive index of first layer | | - | 0.688 | 0.190 | 0.435 | 0.606 |
| | Magnitude $N_1$ of complex refractive index of first layer - magnitude $N_2$ of complex refractive index of second layer | | - | - | - | 0.301 | 0.539 |

(continued)

| | | | Comparative Example | | | |
|---|---|---|---|---|---|---|
| | | | 1 | 2 | 3 | 4 |
| | Magnitude $N_2$ of complex refractive index of second layer - magnitude $N_2$ of complex refractive index of third layer | - | - | - | - | 0.218 |
| | Magnitude $N_N$ of complex refractive index of $N^{th}$ layer*- Refractive index of air | - | 0.688 | 0.190 | 0.134 | 0.286 |
| | Load at 1-mm deflection with width of 10 mm | N | 82 | - | - | - |
| | Magnitude $M_{12}$ of $m_{12}$ component - magnitude $M_{21}$ of $m_{21}$ component in characteristic matrix\|(angle of incidence: 0°) | - | 0.19 | 0.30 | 0.36 | 0.13 |
| | Magnitude $M_{11}$ of $m_{11}$ component in characteristic matrix (angle of incidence: 60°TE wave) | - | 0.83 | 0.13 | 0.67 | 1.15 |
| When thickness of cover was set to +1mm | Magnitude $M_{11}$ of $m_{11}$ component in characteristic matrix (angle of incidence: 60°TE wave) | - | 0.97 | - | - | - |
| | Magnitude $M_{12}$ of $m_{12}$ component - magnitude $M_{21}$ of $m_{21}$ component in characteristic matrix\| (angle of incidence: 0°) | - | 0.80 | - | - | - |
| | Frontal direction transmittance X | % | 83.5 | - | - | - |
| | Oblique transmittance of TE wave Y (angle of incidence: 60°) | % | 85.6 | - | - | - |
| | (100 - frontal transmittance X) × (100 - oblique transmittance Y) | - | 238.5 | - | - | - |
| | Frontal transmittance X - oblique transmittance Y | % | -2.1 | - | - | - |
| | A | - | 0.131 | - | - | - |

(continued)

| | | | Comparative Example | | | |
|---|---|---|---|---|---|---|
| | | | 1 | 2 | 3 | 4 |
| When thickness of cover was set to -1mm | Magnitude $M_{11}$ of $m_{11}$ component in characteristic matrix (angle of incidence: 60°TE wave) | - | 013 | - | - | - |
| | \|Magnitude $M_{12}$ of $m_{12}$ component - magnitude $M_{21}$ of $m_{21}$ component in characteristic matrix\| (angle of incidence: 0°) | - | 1.00 | - | - | - |
| | Frontal direction transmittance X | % | 78.8 | - | - | - |
| | Oblique transmittance of TE wave Y (angle of incidence: 60°) | % | 38.0 | - | - | |
| | (100 - frontal transmittance X) × (100 - oblique transmittance Y) | - | 1313.5 | - | - | - |
| | Frontal transmittance X - oblique transmittance Y | % | 40.8 | - | - | - |
| | A | - | 0.185 | - | - | - |
| *"N^th^ layer" means "first layer" in Comparative Examples 1 and 2, "second layer" in Comparative Example 3, and "third layer" in Comparative Example 4 | | | | | | |

[Table 2-1]

| | | | Examples | | | | | | | |
|---|---|---|---|---|---|---|---|---|---|---|
| | | | 31 | 32 | 33 | 34 | 35 | 36 | 37 | 38 |
| Frequency | | GHz | 5 | 28 | 39 | 79 | 5 | 28 | 39 | 79 |
| First layer | Material | - | Foam3.5 | Foam35 | Foam35 | Foam35 | Foam35 | Foam35 | Foam35 | Foam3.5 |
| | Thickness $d_1$ | m | 0.0050 | 0.0040 | 0.0050 | 0.0025 | 0.0050 | 0.0050 | 0.0050 | 0.0050 |
| | Density | $g/cm^3$ | 0.29 | 0.29 | 0.29 | 0.29 | 0.29 | 0.29 | 0.29 | 0.29 |
| | Relative permittivity | - | 1.41 | 1.41 | 1.41 | 1.41 | 1.41 | 1.41 | 1.41 | 1.41 |
| | Dielectric dissipation factor | - | 0.00313 | 0.00313 | 0.00313 | 0.00313 | 0.00313 | 0.00313 | 0.00313 | 0.00313 |
| | Magnitude $N_1$ of complex refractive index | - | 1.190 | 1.190 | 1.190 | 1.190 | 1.190 | 1.190 | 1.190 | 1.190 |
| | $d_1 \times N_1 \div \lambda_0$ | - | 0.099 | 0.444 | 0.774 | 0.784 | 0.099 | 0.555 | 0.774 | 1.567 |
| | Flame retardancy level | - | V-0 | V-0 | V-0 | V-0 | V-0 | V-0 | V-0 | V-0 |
| | B/A | - | - | - | - | - | - | - | - | - |
| | B'/A | | 0.61 | 0.61 | 0.61 | 0.61 | 0.61 | 0.61 | 0.61 | 0.61 |
| | B'/A' | - | 1.11 | 1.11 | 1.11 | 1.11 | 1.11 | 1.11 | 1.11 | 1.11 |
| | Maximun cell diameter | mm | 287 | 287 | 287 | 287 | 287 | 287 | 287 | 287 |

(continued)

| | | | Examples | | | | | | | |
|---|---|---|---|---|---|---|---|---|---|---|
| | | | 31 | 32 | 33 | 34 | 35 | 36 | 37 | 38 |
| Second layer | Material | - | Foam5 | Foam5 | Foam5 | Foam5 | - | - | - | - |
| | Thickness $d_2$ | m | 0.0050 | 0.0040 | 0.0050 | 0.0025 | - | - | - | - |
| | Density | $g/cm^3$ | 0.20 | 0.20 | 0.20 | 0.20 | - | - | - | - |
| | Relative permittivity | - | 1.28 | 1.28 | 1.28 | 1.28 | - | - | - | - |
| | Dielectric dissipation factor | - | 0.00234 | 0.00234 | 0.00234 | 0.00234 | - | - | - | - |
| | Magnitude $N_2$ of complex refractive index | - | 1.134 | 1.134 | 1.134 | 1.134 | - | - | - | - |
| | $d_2 \times N_2 \div \lambda_0$ | - | 0.095 | 0.423 | 0.737 | 0.747 | - | - | - | - |
| | Flame retardancy level | - | V-0 | V-0 | V-0 | V-0 | - | - | - | - |
| | B/A | < | - | - | - | - | - | - | - | - |
| | B'/A | | 0.81 | 0.81 | 0.81 | 0.81 | - | - | - | - |
| | B'/A' | - | 1.29 | 1.29 | 1.29 | 1.29 | - | - | - | - |
| | Maximun cell diameter | mm | 78 | 78 | 78 | 78 | - | - | - | - |
| $\Lambda$ (K = 0) | | - | 0.194 | 0.868 | 1.511 | 1.530 | 0.099 | 0.555 | 0.774 | 1.567 |
| A | | - | 0.194 | 0.132 | 0.011 | 0.030 | 0.099 | 0.055 | 0.226 | 0.067 |
| Frontal direction transmittance X | | % | 97.7 | 97.4 | 97.2 | 97.1 | 98.8 | 98.5 | 95.7 | 96.4 |
| Oblique transmittance of TE wave Y (angle of incidence: 60°) | | % | 89.7 | 93.0 | 95.7 | 95.2 | 95.3 | 88.0 | 96.6 | 90.5 |
| (100 - frontal transmittance X) × (100 - oblique transmittance Y) | | - | 23.9 | 18.3 | 12.2 | 13.8 | 5.8 | 17.6 | 14.6 | 33.7 |
| Frontal transmittance X - oblique transmittance Y | | % | 8.0 | 4.4 | 1.5 | 1.9 | 3.4 | 10.6 | -1.0 | 5.9 |
| Frontal reflectance | | % | 2.0 | 1.1 | 0.2 | 0.3 | 1.0 | 0.3 | 2.8 | 0.5 |
| Oblique reflectance of TE wave (angle of incidence: 60°) | | % | 9.7 | 4.7 | 0.1 | 0.5 | 4.2 | 10.6 | 0.9 | 4.7 |
| \| Refractive index of air - magnitude $N_1$ of complex refractive index of first layer \| | | - | 0.190 | 0.190 | 0.190 | 0.190 | 0.190 | 0.190 | 0.190 | 0.190 |

(continued)

| | | Examples | | | | | | | |
|---|---|---|---|---|---|---|---|---|---|
| | | 31 | 32 | 33 | 34 | 35 | 36 | 37 | 38 |
| \| Magnitude $N_1$ of complex refractive index of first layer - magnitude $N_2$ of complex refractive index of second layer \| | - | 0.056 | 0.056 | 0.056 | 0.056 | - | - | - | - |
| \| Magnitude $N_2$ of complex refractive index of second layer - magnitude $N_3$ of complex refractive index of third layer \| | - | - | - | - | - | - | - | - | - |
| \| Magnitude $N_N$ of complex refractive index of $N^{th}$ layer* - Refractive index of air \| | - | 0.134 | 0.134 | 0.134 | 0.134 | 0.190 | 0.190 | 0.190 | 0.190 |
| \| Magnitude $M_{12}$ of $m_{12}$ component - magnitude $M_{21}$ of $m_{21}$ component in characteristic matrix \| (angle of incidence: 0°) | - | 0.28 | 0.22 | 0.01 | 0.05 | 0.20 | 0.12 | 0.34 | 0.14 |
| Magnitude $M_{11}$ of $m_{11}$ component in characteristic matrix (angle of incidence: 60° TE wave) | - | 0.71 | 0.79 | 1.00 | 1.00 | 0.91 | 0.73 | 0.98 | 0.89 |

* "$N^{th}$ layer" means "second layer" in Examples 31 to 34 and "first layer" in Examples 35 to 38.

[Table 2-2]

| | | | Examples | | | | | | Comparative Example | | | |
|---|---|---|---|---|---|---|---|---|---|---|---|---|
| | | | 39 | 40 | 41 | 42 | 43 | 44 | 11 | 12 | 13 | 14 |
| Frequency | | GHz | 5 | 28 | 39 | 79 | 5 | 39 | 5 | 28 | 39 | 79 |
| First layer | Material | - | 442Z | 442Z | 442Z | 442Z | 442Z | 442Z | PC | PC | PC | PC |
| | Thickness $d_1$ | m | 0.0010 | 0.0003 | 0.0003 | 0.0012 | 0.0005 | 0.0005 | 0.0030 | 0.0030 | 0.0023 | 0.0023 |
| | Density | $g/cm^3$ | 1.10 | 1.10 | 1.10 | 1.10 | 1.10 | 1.10 | 1.19 | 1.19 | 1.19 | 1.19 |
| | Relative permittivity | - | 2.50 | 2.50 | 2.50 | 2.50 | 2.50 | 2.50 | 2.85 | 2.85 | 2.85 | 2.85 |
| | Dielectric dissipation factor | - | 0.00438 | 0.00438 | 0.00438 | 0.00438 | 0.00438 | 0.00438 | 0.00780 | 0.00780 | 0.00780 | 0.00780 |
| | Magnitude $N_1$ of complexrefractive index | - | 1.581 | 1.581 | 1.581 | 1.581 | 1.581 | 1.581 | 1.688 | 1.688 | 1.688 | 1.688 |
| | $d_1 \times N_1 \div \lambda_0$ | - | 0.026 | 0.044 | 0.062 | 0.500 | 0.013 | 0.103 | 0.084 | 0.473 | 0.505 | 1.023 |
| | Flame retardancy level | - | V-0 | V-0 | V-0 | V-0 | V-0 | V-0 | V-0 | V-0 | V-0 | V-0 |
| | B/A | - | - | - | - | - | - | - | - | - | - | - |
| | B'/A | | - | - | - | - | - | - | - | - | - | - |
| | B'/A' | - | - | - | - | - | - | - | - | - | - | - |
| | Maximun cell diameter | mm | - | - | - | - | - | - | - | - | - | - |

(continued)

| | | | Examples | | | | | | Comparative Example | | | |
|---|---|---|---|---|---|---|---|---|---|---|---|---|
| | | | 39 | 40 | 41 | 42 | 43 | 44 | 11 | 12 | 13 | 14 |
| Second layer | Material | - | Foam 10 | Foam 10 | Foam 10 | Foam 10 | Foam 3.5 | Foam3.5 | - | - | - | - |
| | Thickness $d_2$ | m | 0.0090 | 0.0097 | 0.0097 | 0.0038 | 0.0030 | 0.0014 | - | - | - | - |
| | Density | $g/cm^3$ | 0.10 | 0.10 | 0.10 | 0.10 | 0.29 | 0.29 | - | - | - | - |
| | Relative permittivity | - | 1.14 | 1.14 | 1.14 | 1.14 | 1.41 | 1.41 | - | - | - | - |
| | Dielectric dissipation factor | - | 0.00140 | 0.00140 | 0.00140 | 0.00140 | 0.00313 | 0.00313 | - | - | - | - |
| | Magnitude $N_2$ of complexrefractive index | - | 1.068 | 1.068 | 1.068 | 1.068 | 1.190 | 1.190 | - | - | - | - |
| | $d_2 \times N_2 \div \lambda_0$ | - | 0.160 | 0.967 | 1.347 | 1.069 | 0.060 | 0.217 | - | - | - | - |
| | Flame retardancy level | - | V-0 | V-0 | V-0 | V-0 | V-0 | V-0 | - | - | - | - |
| | B/A | | | | | | - - | - - | - - | - | | |
| | B'/A | | 0.91 | 0.91 | 0.91 | 0.91 | 0.61 | 0.61 | - | - | - | - |
| | B'/A' | - | 0.78 | 0.78 | 0.78 | 0.78 | 1.11 | 1.11 | - | - | - | - |
| | Maximun cell diameter | mm | 103 | 103 | 103 | 103 | 287 | 287 | - | - | - | - |

(continued)

| | | | Examples | | | | | | Comparative Example | | | |
|---|---|---|---|---|---|---|---|---|---|---|---|---|
| | | | 39 | 40 | 41 | 42 | 43 | 44 | 11 | 12 | 13 | 14 |
| Third layer | Material | - | - | - | - | - | 442Z | 442Z | - | - | - | - |
| | Thickness $d_3$ | m | - | - | - | - | 0.0005 | 0.0005 | - | - | - | - |
| | Density | $g/cm^3$ | - | - | - | - | 1.10 | 1.10 | - | - | - | - |
| | Permittivity | - | - | - | - | - | 2.50 | 2.50 | - | - | - | - |
| | Dielectric dissipation factor | < | - | - | - | - | 0.00438 | 0.00438 | - | - | - | - |
| | Magnitude N3 of complex refractive index | < | - | - | - | - | 1.581 | 1.581 | - | - | - | - |
| | $d_3 \times N_3 \div \lambda_0$ | - | - | - | - | - | 0.013 | 0.103 | - | - | - | - |
| | Flame retardancy level | - | - | - | - | - | V-0 | V-0 | - | - | - | - |
| | B/A | - | - | - | - | - | - | - | - | - | - | - |
| | B'/A' | - | - | - | - | - | - | - | - | - | - | - |
| | Maximun cell diameter | mm | - | - | - | - | - | - | - | - | - | - |
| $\Lambda$ (K = 0) | | - | 0.187 | 1.012 | 1.409 | 1.569 | 0.086 | 0.422 | 0.084 | 0.473 | 0.505 | 1.023 |
| A | | - | 0.187 | 0.012 | 0.091 | 0.069 | 0.086 | 0.078 | 0.084 | 0.027 | 0.005 | 0.023 |
| Frontal direction transmittance X | | % | 98.5 | 97.6 | 96.8 | 97.5 | 98.0 | 98.1 | 92.3 | 96.6 | 97.2 | 93.9 |
| Oblique transmittance of TE wave Y (angle of incidence: 60°) | | % | 90.6 | 88.3 | 90.4 | 84.0 | 92.4 | 81.1 | 75.3 | 64.7 | 76.2 | 53.2 |
| (100 - frontal transmittance X) × (100 - oblique transmittance Y) | | - | 13.9 | 27.5 | 30.6 | 39.9 | 15.1 | 35.5 | 190.3 | 118.6 | 67.0 | 286.0 |
| Frontal transmittance X - oblique transmittance Y | | % | 8.0 | 9.3 | 6.4 | 13.5 | 5.6 | 17.0 | 17.0 | 32.0 | 21.0 | 42.0 |
| Frontal reflectance | | % | 1.2 | 1.3 | 1.8 | 0.1 | 1.8 | 0.7 | 7.1 | 0.8 | 0.0 | 0.6 |

(continued)

| | | Examples | | | | | | Comparative Example | | | |
|---|---|---|---|---|---|---|---|---|---|---|---|
| | | 39 | 40 | 41 | 42 | 43 | 44 | 11 | 12 | 13 | 14 |
| Oblique reflectance of TE wave (angle of incidence: 60°) | % | 6.4 | 10.0 | 7.4 | 12.9 | 7.1 | 17.6 | 23.7 | 32.9 | 20.6 | 20.6 |
| \| Refractive index of air - magnitude $N_1$ of complex refractive index of first layer \| | - | 0.581 | 0.581 | 0.581 | 0.581 | 0.581 | 0.581 | 0.688 | 0.688 | 0.688 | 0.688 |
| \| Magnitude $N_1$ of complex refractive index of first layer - magnitude $N_2$ of complexrefractive index of second layer \| | - | 0.513 | 0.513 | 0.513 | 0.513 | 0.392 | 0.392 | - | - | - | - |
| \| Magnitude $N_2$ of complexrefractive index of second layer - magnitude $N_3$ of complex refractive index of third layer \| | | - | - | - | - | 0.392 | 0.392 | - | - | - | - |
| \| Magnitude $N_N$ of complex refractive index of $N^{th}$ layer*-Refractive index of air \| | - | 0.068 | 0.068 | 0.068 | 0.068 | 0.581 | 0.581 | 0.688 | 0.688 | 0.688 | 0.688 |
| \| Magnitude $M_{12}$ of $m_{12}$ component - magnitude $M_{21}$ of $m_{21}$ component in characteristic matrix \| (angle of incidence: 0°) | - | 0.19 | 0.20 | 0.11 | 0.06 | 0.27 | 0.17 | 0.55 | 0.19 | 0.04 | 0.16 |
| Magnitude $M_{11}$ of $m_{11}$ component in characteristic matrix (angle of incidence: 60° TE wave) | - | 0.79 | 0.69 | 0.88 | 1.35 | 0.92 | 0.51 | 0.90 | 0.83 | 0.91 | 0.72 |

* "$N^{th}$ layer" means "second layer" in Examples 39 to 42, "third layer" in Examples 43 and 44, and "first layer" in Comparative Examples 11 to 14.

INDUSTRIAL APPLICABILITY

Because the cover of the present disclosure has a high radio wave permeability for radio waves in the frontal direction (at an angle of incidence of 0 °) and also exhibits a radio wave permeability at angles of incidence in a wide range, it is suitable for use as a cover for an electronic device that transmits and receives radio waves in the high-frequency band.

## Claims

1. A cover for an electronic device that transmits and receives radio waves in a high-frequency band, the cover comprising a resin and satisfying the relationship of the following formula:

$$(100 - \text{a frontal transmittance X}) \times (100 - \text{an oblique transmittance Y}) < 55$$

(where the frontal transmittance X (%) is a radio wave transmittance at an angle of incidence of 0 ° of the cover at a frequency f (Hz), and the oblique transmittance Y (%) is a radio wave transmittance of TE wave at an angle of incidence of 60 ° of the cover at the frequency f (Hz)).

2. The cover according to claim 1,

being a monolayer or a laminate composed of N layers (N is an integer equal to or greater than 1),
wherein an absolute value of a difference (| $M_{12}$ - $M_{21}$ |) between a magnitude $M_{12}$ of an $m_{12}$ component and a magnitude $M_{21}$ of an component in a frontal direction (at an angle of incidence of 0 °) in the following characteristic matrix formula is 0.35 or less,
each component of the characteristic matrix is calculated from the following formulas:

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$n_i \sin \theta_i = n_0 \sin \theta_0$
(where $\omega$ is an angular frequency [rad/s], c is the speed of light [m/s], n; is a complex refractive index of an $i^{th}$ layer, $d_i$ is a thickness of the $i^{th}$ layer [m], $\theta_i$ is a refractive angle of an electromagnetic wave incident on the $i^{th}$ layer [rad], j is the imaginary unit, $\varepsilon_{ri}$ is a complex relative permittivity of the $i^{th}$ layer, $\mu_{ri}$ is a complex relative magnetic permeability of the $i^{th}$ layer, $n_0$ is the refractive index of the air, and $\theta_0$ is an angle of incidence [rad]), and the complex refractive index $n_i$ of the $i^{th}$ layer is determined by the following formula, and, from the obtained complex refractive index $n_i$, the magnitude $N_i$ thereof is obtained:

[Math 1]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where $n_i$ is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan $\delta$ is a dielectric dissipation factor, $\varepsilon_i$' is a relative permittivity, and $\varepsilon_i$" is a relative dielectric loss factor).

**3.** The cover according to claim 1 or 2, satisfying the relationship of the following formula:

| the frontal transmittance X - the oblique transmittance Y | < 25

(where the frontal transmittance X (%) is a radio wave transmittance at an angle of incidence of 0 ° of the cover at the frequency f (Hz), and the oblique transmittance Y (%) is a radio wave transmittance of TE wave at an angle of incidence of 60 ° of the cover at the frequency f (Hz)).

**4.** The cover according to any one of claims 1 to 3,

being a monolayer or a laminate composed of N layers (N is an integer equal to or greater than 1),
wherein a minimum value of A determined by the following formula is 0.15 or less:

[Math 3]

$$\Lambda = \left| \sum_{i=1}^{N} (d_i \times N_i \div \lambda_0) - 0.5K \right|$$

(where $d_i$ is the thickness of the $i^{th}$ layer [m], $N_i$ is a magnitude of the complex refractive index $n_i$ of the $i^{th}$ layer, $\lambda_0$ is a wavelength of the electromagnetic wave in the air [m], and K is any integer), and
the complex refractive index $n_i$ of the $i^{th}$ layer is determined by the following formula, and, from the obtained complex refractive index $n_i$, the magnitude $N_i$ thereof is obtained:

[Math 4]

$$n_i = n_i' + jn_i'' = \sqrt{\varepsilon_{ri}\mu_{ri}}$$

$$\varepsilon_{ri} = \varepsilon_i' + j\varepsilon_i''$$

$$n_i' = \left\{\sqrt{2\varepsilon_i' + \sqrt{\varepsilon_i''^2 + 4\varepsilon_i'^2}}\right\}/2$$

$$n_i'' = \frac{\varepsilon_i''}{2n_i'}$$

$$\tan\delta = \frac{\varepsilon_i''}{\varepsilon_i'}$$

(where n; is the complex refractive index of the $i^{th}$ layer, j is the imaginary unit, $\varepsilon_{ri}$ is the complex relative permittivity of the $i^{th}$ layer, $\mu_{ri}$ is the complex relative magnetic permeability of the $i^{th}$ layer, tan $\delta$ is the dielectric dissipation factor, $\varepsilon_i$' is the relative permittivity, and $\varepsilon_i$" is the relative dielectric loss factor).

**5.** The cover according to any one of claims 1 to 4,

being a monolayer or a laminate composed of N layers (N is an integer equal to or greater than 1), wherein, in the following characteristic matrix formula, a magnitude $M_{11}$ of a $m_{11}$ component of TE wave at an angle of incidence of 60 ° is 0.5 or more,

[Math 5]

$$M = \prod_{i=1}^{N} M_i = \begin{bmatrix} m_{11} & m_{12} \\ m_{21} & m_{22} \end{bmatrix}$$

$$M_i = \begin{bmatrix} \cos\left(\frac{\omega}{c} n_i d_i \cos\theta_i\right) & -\frac{j}{\cos\theta_i}\sqrt{\frac{\mu_{ri}}{\varepsilon_{ri}}}\sin\left(\frac{\omega}{c} n_i d_i \cos\theta_i\right) \\ -j\sqrt{\frac{\varepsilon_{ri}}{\mu_{ri}}}\cos\theta_i \sin\left(\frac{\omega}{c} n_i d_i \cos\theta_i\right) & \cos\left(\frac{\omega}{c} n_i d_i \cos\theta_i\right) \end{bmatrix}$$

$$n_i \sin\theta_i = n_0 \sin\theta_0$$

(where $\omega$ is an angular frequency [rad/s], c is the speed of light [m/s], $n_i$ is the complex refractive index of the $i^{th}$ layer, $d_i$ is the thickness of the $i^{th}$ layer [m], $\theta_i$ is the refractive angle of an electromagnetic wave incident on the $i^{th}$ layer [rad], j is the imaginary unit, $\varepsilon_{ri}$ is the complex relative permittivity of the $i^{th}$ layer, $\mu_{ri}$ is the complex relative magnetic permeability of the $i^{th}$ layer, $n_0$ is the refractive index of the air, and $\theta_0$ is the angle of incidence [rad]).

**6.** The cover according to any one of claims 1 to 5, wherein the magnitude $N_i$ of the complex refractive index $n_i$ is 1.8 or less.

**7.** The cover according to any one of claims 1 to 6, wherein the cover is a monolayer or a laminate and a density of

at least one layer is less than 0.90 $g/cm^3$.

**8.** The cover according to any one of claims 1 to 7, being a laminate having a plurality of layers.

**9.** The cover according to claim 8, wherein a maximum difference in the magnitude of the complex refractive index between adjacent layers is 0.8 or less.

**10.** The cover according to claim 8 or 9, wherein the plurality of layers are laminated in direct contact with each other.

**11.** The cover according to any one of claims 1 to 10,

comprising a layer made of a foam,
wherein, in 10 volume% or more of the layer made of the foam,
in a case in which the foam is not a foam formed of foam particles, a ratio (B/A) of an average value B of diameters of cells included in a range of 20% to 80% in a thickness direction from a surface of the foam relative to an average value A of diameters of cells in contact with the surface of the foam is 0.3 or more and less than 3.0, and
in a case in which the foam is a foam formed of foam particles, for foam particles that are included in a range of 10% to 90% in a thickness direction from a surface of the foam, a ratio (B'/A') of an average value B' of diameters of cells included in a range of 20% to 80% in a radial direction from surfaces of the foam particles relative to an average value A' of diameters of cells in contact with the surfaces of the foam particles is 0.3 or more and less than 3.0.

**12.** The cover according to any one of claims 1 to 11,

comprising a layer made of a foam,
wherein, in 10 volume% or more of the layer made of the foam, a maximum cell diameter is 1.5 mm or less.

**13.** The cover according to any one of claims 1 to 12,
being a laminate and comprising a plurality of layers comprising at least one layer having a density of less than 0.90 $cm^3/g$ and at least one layer having a density of 0.90 $cm^3/g$ or more.

**14.** The cover according to claim 13, wherein at least one layer of layers having a density of 0.90 $cm^3/g$ or more is a surface layer defining an outer surface of the cover.

**INTERNATIONAL SEARCH REPORT**

International application No. **PCT/JP2022/003692**

**A. CLASSIFICATION OF SUBJECT MATTER**

***G01S 7/03***(2006.01)i; ***B32B 7/025***(2019.01)i; ***C08J 9/16***(2006.01)i; ***C08J 9/228***(2006.01)i; ***C08J 9/36***(2006.01)i; ***H01Q 1/42***(2006.01)i; ***H01Q 15/08***(2006.01)i
FI: G01S7/03 246; H01Q1/42; H01Q15/08; B32B7/025; C08J9/16; C08J9/228 CER; C08J9/36 CEZ

According to International Patent Classification (IPC) or to both national classification and IPC

**B. FIELDS SEARCHED**

Minimum documentation searched (classification system followed by classification symbols)

G01S7/00-7/42; G01S13/00-13/95; H01Q1/42; H01Q15/08; B32B7/025; C08J9/16; C08J9/228; C08J9/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2020-159985 A (MITSUBISHI ELECTRIC CORP) 01 October 2020 (2020-10-01) paragraphs [0010]-[0035], fig. 1-7 | 1-5<br>6-14 |
| Y | JP 3-119807 A (HUGHES AIRCRAFT COMPANY) 22 May 1991 (1991-05-22) p. 3, lower right column, line 18 to p. 5, lower right column, line 15, fig. 1-5 | 6, 8-10 |
| Y | JP 2020-176895 A (SANKEI GIKEN KOGYO CO LTD) 29 October 2020 (2020-10-29) paragraphs [0018]-[0025], [0063], fig. 1 | 6, 8-10 |
| Y | JP 2003-078325 A (HITACHI CABLE LTD) 14 March 2003 (2003-03-14) paragraphs [0022]-[0039], fig. 1-4 | 7, 11-14 |
| Y | JP 10-150316 A (FURUKAWA ELECTRIC CO LTD) 02 June 1998 (1998-06-02) claims, fig. 1 | 7, 11-14 |
| Y | CD-ROM of the specification and drawings annexed to the request of Japanese Utility Model Application No. 52169/1992 (Laid-open No. 7077/1994) (ANRITSU CORP) 28 January 1994 (1994-01-28), paragraphs [0002], [0004], fig. 3 | 13-14 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2022/003692**

**C. DOCUMENTS CONSIDERED TO BE RELEVANT**

| Category* | Citation of document, with indication, where appropriate, of the relevant passages | Relevant to claim No. |
|---|---|---|
| A | WO 2021/006186 A1 (NITTO DENKO CORP) 14 January 2021 (2021-01-14)<br>entire text, all drawings | 1-14 |
| A | JP 2009-047633 A (PANASONIC CORP) 05 March 2009 (2009-03-05)<br>entire text, all drawings | 1-14 |
| A | US 2020/0058991 A1 (LUFTHANSA TECHNIK AG) 20 February 2020 (2020-02-20)<br>entire text, all drawings | 1-14 |
| P, A | JP 2021-136540 A (ASAHI KASEI CORP) 13 September 2021 (2021-09-13)<br>entire text, all drawings | 1-14 |

Form PCT/ISA/210 (second sheet) (January 2015)

**INTERNATIONAL SEARCH REPORT**
**Information on patent family members**

International application No.
**PCT/JP2022/003692**

| Patent document cited in search report | Publication date (day/month/year) | Patent family member(s) | Publication date (day/month/year) |
|---|---|---|---|
| JP 2020-159985 A | 01 October 2020 | (Family: none) | |
| JP 3-119807 A | 22 May 1991 | US 5017939 A<br>column 3, line 66 to column 5, line 47, fig. 1-5<br>EP 420137 A2<br>DE 69013839 C<br>ES 2062243 T<br>CA 2024118 A1<br>IL 95519 A<br>AU 6221090 A<br>KR 10-1991-0007176 A | |
| JP 2020-176895 A | 29 October 2020 | WO 2020/213309 A1<br>paragraphs [0018]-[0025], [0063], fig. 1 | |
| JP 2003-078325 A | 14 March 2003 | (Family: none) | |
| JP 10-150316 A | 02 June 1998 | (Family: none) | |
| JP 6-7077 U1 | 28 January 1994 | (Family: none) | |
| WO 2021/006186 A1 | 14 January 2021 | (Family: none) | |
| JP 2009-047633 A | 05 March 2009 | (Family: none) | |
| US 2020/0058991 A1 | 20 February 2020 | WO 2018/077823 A1<br>entire text, all drawings<br>EP 3533108 A1<br>DE 102016221143 A1<br>CN 109891669 A<br>BR 112019008319 A | |
| JP 2021-136540 A | 13 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020159985 A
- JP 2020180986 A
- JP H04372630 A
- JP H4372630 A
- JP 2006077218 A